# EUROPEAN PATENT APPLICATION

(11) **EP 4 242 874 A1**
(43) Date of publication of application: **13.09.2023**
(21) Application number: 21905648.8
(22) Date of filing: 11.12.2021
(51) Int. Cl.: G06F 16/78, G06F 16/738

(54) **METHOD FOR DISPLAYING LABEL IN IMAGE PICTURE, TERMINAL DEVICE, AND STORAGE MEDIUM**

(30) Priority: 16.12.2020 CN 202011489026
(71) Applicant: Petal Cloud Technology Co., Ltd., Dongguan, Guangdong 523799 (CN)
(72) Inventor: ZHAO, Bin, Shenzhen, Guangdong 518129 (CN)
(74) Representative: Grünecker Patent- und Rechtsanwälte PartG mbB
(86) International application number: PCT/CN2021/137282
(87) International publication number: WO 2022/127719

(57) **Abstract**

This application provides a method for displaying a label in an image picture, a terminal device, and a storage medium, and relates to the field of video processing technologies. According to the foregoing solution, when selecting a target object (for example, a character role) in a video picture, a user may identify the target object based on feature information of the target object, and determine an identifier of the target object. Because there is a correspondence relationship between the identifier of the target object and a first label, the corresponding first label may be displayed in the video picture for the target object selected by the user, so that it is convenient for the user to view label information of an object of interest in the video picture in real time, and a current problem of a poor prompt effect of a prompt subtitle for a character role in the video picture is resolved.

## Description

This application claims priority to Chinese Patent Application No. 202011489026.9, filed with the China National Intellectual Property Administration on December 16, 2020, and entitled "METHOD FOR DISPLAYING LABEL IN IMAGE PICTURE, TERMINAL DEVICE, AND STORAGE MEDIUM", which is incorporated herein by reference in its entirety.

### TECHNICAL FIELD

This application relates to the field of video processing technologies, and in particular, to a method for displaying a label in an image picture, a terminal device, and a computer-readable storage medium.

### BACKGROUND

Currently, with rapid development of various types of video software, a user can use various types of video software to watch various types of video files (such as TV series and movies) during daily entertainment and work. For a case in which a large quantity of character roles appear in a video picture, to facilitate an audience to know the character roles, a prompt subtitle is usually provided when a character appears for the first time, and the user may learn related information about the character role by using the prompt subtitle.

However, the prompt subtitle usually disappears after only a few seconds, and does not appear again in a subsequent picture. If the user needs to check the prompt subtitle to confirm the character role again for reasons such as not remembering the character role, the user needs to try a plurality of times finding an episode where the subtitle is displayed (for example, a second episode) from a currently watched video picture (for example, a fifth episode), try a plurality of times dragging to a video picture where the subtitle is displayed, to view the prompt subtitle labeled for the character role, and then return to the video picture of the currently watched episode. These processes are complicated, inconvenient, and time-consuming, affecting viewing experience of the user. As a result, a prompt effect of a current prompt subtitle for a character role in a video picture is poor.

### SUMMARY

This application provides a method for displaying a label in an image picture, a terminal device, and a computer-readable storage medium, to resolve a current problem of a poor prompt effect of a prompt subtitle for a character role in a video picture.

To achieve the foregoing objective, the following technical solutions are used in this application.

According to a first aspect, this application provides a method for displaying a label in an image picture, and the method includes: determining an identifier of a target object based on feature information of the target object when it is detected that the target object in a first frame of image picture of a target video stream is selected; and displaying a first label corresponding to the identifier of the target object on the first frame of image picture.

According to the foregoing solution, when selecting a target object (for example, a character role) in a video picture, a user first identifies the target object based on the feature information of the target object, and determines the identifier of the target object. Because there is a correspondence relationship between the identifier of the target object and the first label, the corresponding first label may be displayed in the video picture for the target object selected by the user. In this way, the user only needs to select, on the video picture, a character role that the user wants to view, and a terminal device can quickly obtain a label of the character role, and display the label to the user for viewing. Therefore, the user can view label information of the object of interest in the video picture in real time, which improves user experience. This can resolve the current problem of a poor prompt effect of a prompt subtitle for a character role in a video picture.

The first label may be a system preset label, or may be a user-defined label.

In some embodiments, before the determining an identifier of a target object based on feature information of the target object when it is detected that the target object in a first frame of image picture of a target video stream is selected, the method further includes: in response to a first operation performed by a user on the target object in a second frame of image picture of the target video stream, generating the first label, where there is a correspondence relationship between the first label and the identifier of the target object.

The correspondence relationship may be stored in a terminal device, or may be stored in a server. When the correspondence relationship may be stored in the terminal device, the terminal device may locally invoke the correspondence relationship to determine the first label corresponding to the identifier of the target object. When the correspondence relationship may be stored in the server, the terminal device may obtain the first label by interacting with the server. To be specific, the terminal device sends the feature information of the target object to the server, the server determines the identifier of the target object based on the feature information of the target object, and determines the first label corresponding to the identifier of the target object based on the correspondence relationship, and then the server sends the first label to the terminal device.

Optionally, personalized information such as a label may be added at any time for a character role in a movie frame. Certainly, personalized information such as a label can be added at any time for a plot in a movie frame. According to the foregoing solution, the user is allowed to add a character (artist) label in a movie watching process, and view the label at any time. It is convenient for the user to review role information/a plot in a timely manner. Therefore, the solution provided in this embodiment of this application can improve movie watching smoothness and user experience.

It should be noted that, when generating the first label, the terminal device may display the first label in the first frame of image picture, and hide the first label after the first frame of image picture is switched to another image picture, to avoid interference caused by frequent occurrence of the label in an image picture to the user. Certainly, when generating the first label, the terminal device may not display the first label, and display the first label only when triggered by the user.

In some embodiments, after the displaying a first label corresponding to the identifier of the target object on the first frame of image picture, the method further includes: in response to a second operation performed by the user on the first label, performing first processing on the first label, where the first processing is any one of the following: updating content of the first label; updating a display location of the first label; sharing the first label; hiding the first label; and deleting the first label.

According to the foregoing solution, the user is supported to perform various processing on a label of a character role/a plot in a video picture. During movie watching, the user may edit a label for a character or an actor in a video based on personal movie watching experience, and the user may view, modify, share, or delete the label at any time, which improves flexibility of label application.

In some embodiments, the displaying a first label corresponding to the identifier of the target object on the first frame of image picture includes: displaying the first label in a display area corresponding to the target object in the first frame of image picture, where the display area is located in a preset range centered on the target object.

The display area corresponding to the target object may be an area in a preset range centered on the target object. The preset range may be set based on a specific situation. For example, the preset range may be a circular range with a radius of R. In this case, the display area corresponding to the target object may be a circular area that is centered on the target object and is with a radius of R.

Optionally, the display area may be an area other than an area in which the target object is located in a preset range centered on the target object. For example, the display area may be an area other than an area in which a character A is located in a preset range centered on the character A.

Further, optionally, the display area may be an area other than an area in which a face of the target object is located in a preset range centered on the target object. For example, the display area may be an area other than an area in which a face of a character A is located in a preset range centered on the character A.

In some embodiments, the displaying a first label corresponding to the identifier of the target object on the first frame of image picture includes: displaying a label box on the first frame of image picture, and displaying the first label in the label box.

It should be noted that a display shape and a display size of the label frame may be set based on a user requirement, and the label frame may be moved. The display shape, the display size, and a display location of the label frame are not limited in this application.

In some embodiments, the identifier of the target object is determined based on a correspondence relationship between at least one piece of feature information and at least one identifier, and the at least one piece of feature information is in a one-to-one correspondence with the at least one identifier; and the at least one piece of feature information includes feature information of the target object, and the at least one identifier includes the identifier of the target object. It should be noted that the identifier of the target object may be determined by the terminal device based on the foregoing correspondence relationship, or may be determined by the server and then sent to the terminal device.

In some embodiments, the feature information of the target object is facial feature information of the target object.

In some embodiments, that it is detected that the target object in a first frame of image picture of a target video stream is selected includes: in response to a third operation performed by the user on the first frame of image picture, displaying a selection box in an area in which a face of the target object is located in the first frame of image picture, and determining that the target object is selected.

In some other embodiments, that it is detected that the target object in a first frame of image picture of a target video stream is selected includes: in response to a fourth operation performed by the user on the first frame of image, displaying a face detection box in a face area of each object in the first frame of image; and when it is detected that the face detection box corresponding to the target object is selected, determining that the target object is selected.

In some embodiments, the method further includes:
in response to a fifth operation of the user, displaying at least one label in a current playback screen of the target video stream, where each label corresponds to one frame of image picture or one video clip in the target video stream;
if it is detected that the first label in the at least one label is selected, obtaining, based on the first label, first video playback information stored in association with the first label; and
jumping from the current playback screen to first video content indicated by the first video playback information for playback, where the first video content is the first frame of image picture or a first video clip that has preset playback duration and includes the first frame of image picture.

According to the foregoing solution, video content indicated by video play information stored associated with a label may be quickly searched for or located for playback based on the label.

In some embodiments, the method further includes:
in response to a sixth operation of the user, displaying a label search box on the current playback screen of the target video stream;
if it is detected that the first label is entered into the label search box, obtaining, based on the first label, first video playback information stored in association with the first label; and
jumping from the current playback screen to first video content indicated by the first video playback information for playback, where the first video content is the first frame of image picture or a first video clip that has preset playback duration and includes the first frame of image picture.

According to the foregoing solution, video content indicated by video play information stored associated with a label may be quickly searched for or located for playback based on the label.

In some embodiments, the method further includes: when the target video stream is played again and playback progress reaches playback progress indicated by label time information, displaying the first label, where the label time information indicates playback progress of the target video stream when the first label is generated.

According to the foregoing solution, a corresponding label may be displayed for a character role based on a user requirement, and the label may be displayed at a label adding time point when the target video is replayed.

In some embodiments, obtaining the identifier of the target object based on the feature information of the target object when it is detected that the target object in the first frame of image picture of the target video stream is selected includes: in response to a seventh operation performed by the user on the first frame of image picture of the target video stream, determining that a plurality of objects in the first frame of image picture are selected, where the plurality of objects include the target object; and determining a plurality of identifiers of the plurality of objects based on feature information corresponding to the plurality of objects, where the plurality of objects are in a one-to-one correspondence with the plurality of identifiers.

The displaying a first label corresponding to the identifier of the target object on the first frame of image picture includes: displaying, on the first frame of image picture, a plurality of labels corresponding to the plurality of identifiers of the plurality of objects, where the plurality of identifiers are in a one-to-one correspondence with the plurality of labels, and the plurality of labels include the first label.

According to a second aspect, this application provides an apparatus for displaying a label in an image picture. The apparatus includes a unit configured to perform the method in the first aspect. The apparatus may correspondingly perform the method described in the first aspect. For related descriptions of the unit in the apparatus, refer to descriptions of the first aspect. For brevity. Details are not described herein again.

The method described in the first aspect may be implemented by hardware, or may be implemented by hardware executing corresponding software. The hardware or software includes one or more modules or units corresponding to the foregoing functions, for example, a processing module or unit, a display module or unit, or the like.

According to a third aspect, this application provides a terminal device, where the terminal device includes a processor, the processor is coupled to a memory, the memory is configured to store a computer program or instructions, and the processor is configured to execute the computer program or the instructions stored in the memory, so that the method in the first aspect is performed.

For example, the processor is configured to execute a computer program or instructions stored in a memory, so that the apparatus performs the method in the first aspect.

According to a fourth aspect, this application provides a computer-readable storage medium. The computer-readable storage medium stores a computer program (which may also be referred to as instructions or code) used to implement the method in the first aspect.

For example, when the computer program is executed by a computer, the computer can perform the method in the first aspect.

According to a fifth aspect, this application provides a chip, including a processor. The processor is configured to read and execute a computer program stored in the memory, to perform the method in any one of the first aspect and the possible implementations of the first aspect.

Optionally, the chip further includes a memory, and the memory is connected to a processor by using a circuit or a wire.

According to a sixth aspect, this application provides a chip system, including a processor. The processor is configured to read and execute a computer program stored in the memory, to perform the method in any one of the first aspect and the possible implementations of the first aspect.

Optionally, the chip system further includes a memory, and the memory is connected to the processor by using a circuit or a wire.

According to a seventh aspect, this application provides a computer program product, where the computer program product includes a computer program (which may also be referred to as instructions or code), and when the computer program is executed by a computer, the computer implements the method in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic flowchart of a method for displaying a label in an image picture according to an embodiment of this application;
FIG. 2 is a schematic diagram of an interface when the method in FIG. 1 is applied to a terminal device;
FIG. 3 is a schematic flowchart of another method for displaying a label in an image picture according to an embodiment of this application;
FIG. 4 is a schematic diagram of an interface when the method in FIG. 3 is applied to a terminal device;
FIG. 5 is a schematic flowchart of still another method for displaying a label in an image picture according to an embodiment of this application;
FIG. 6 is a schematic flowchart of yet another method for displaying a label in an image picture according to an embodiment of this application;
FIG. 7 is a schematic diagram of an interface when the method in FIG. 6 is applied to a terminal device;
FIG. 8 is a schematic flowchart of still yet another method for displaying a label in an image picture according to an embodiment of this application;
FIG. 9 is a schematic diagram of a structure of a system architecture applied to a method for displaying a label in an image picture according to an embodiment of this application;
FIG. 10 is a schematic interaction diagram 1 of a system architecture applied to a method for displaying a label in an image picture according to an embodiment of this application;
FIG. 11 is a schematic interaction diagram 2 of a system architecture applied to a method for displaying a label in an image picture according to an embodiment of this application;
FIG. 12 is a schematic diagram of a data model of a system architecture applied to a method for displaying a label in an image picture according to an embodiment of this application;
FIG. 13 is a schematic diagram of a structure of an apparatus for displaying a label in an image picture according to an embodiment of this application; and
FIG. 14 is a schematic diagram of a structure of a terminal device according to an embodiment of this application.

### DESCRIPTION OF EMBODIMENTS

The following describes technical solutions in embodiments of this application with reference to the accompanying drawings in embodiments of this application.

In descriptions of this application, unless otherwise specified, "/" means "or", for example, A/B may mean "A or B"; "and/or" used herein is only used to describe an association relationship between associated objects, and indicates that three relationships may exist. For example, "A and/or B" may indicate the following: Only A exists, both A and B exist, and only B exists. In addition, in the descriptions of this application, unless otherwise specified, "a plurality of" means two or more. In addition, for ease of clearly describing the technical solutions in embodiments of this application, "first", "second", and the like in embodiments of this application are used to distinguish between different objects, or are used to distinguish between different processing on a same object, but are not used to describe a specific order of the objects.

Reference to "one embodiment" or "some embodiments" described in the specification of this application means that one or more embodiments of this application include a specific feature, structure, or feature described with reference to the embodiment. Therefore, the statements "in one embodiment", "in some embodiments", "in some other embodiments", and the like appearing at different positions in this specification do not mean that these embodiments are all necessarily referred to, but mean "one or more but not all embodiments", unless otherwise specifically emphasized in other ways. The terms "include", "comprise", "have", and variations thereof all mean "including, but not limited to", unless otherwise specified.

Currently, when a terminal device plays a video stream (for example, a movie or a TV series), a prompt subtitle may be displayed when a character appears for the first time, to introduce role information of the character. The subtitle is preset during production of a movie and cannot be modified or added after the movie is released. A current technology only supports providing a prompt subtitle when a character appears for the first time, and the prompt subtitle usually disappears after a few seconds, and does not appear in a subsequent picture. However, if the prompt subtitle is to be viewed to confirm a character role again, a video picture displaying the subtitle needs to be returned for viewing the prompt subtitle of the character, but this process of searching for an identity of the character is time-consuming and affects viewing experience of the user. That is, this prompt subtitle mode is not real-time enough. As a result, a prompt effect is not good.

In addition, currently, a video application (application, APP) usually supports barrage, and the barrage screen has strong real-time performance. A user may comment on video content by using barrage, or may view comments made by another user. However, in the foregoing related technology, because a large quantity of users simultaneously publish barrage and information is complex, an amount of information is excessively large, and viewing of the user is affected, and a problem that it is difficult for the user to obtain information of interest cannot be resolved. That is, this kind of barrage is not targeted, so a prompt effect is not good.

In view of this, an embodiment of this application provides a method for displaying a label in an image picture. When selecting a target object (for example, a character role) in a video picture, a user first identifies the target object based on the feature information of the target object, and determines the identifier of the target object. Because there is a correspondence relationship between the identifier of the target object and the first label (the first label may be a system preset label or a user-defined label), the corresponding first label may be displayed in the video picture for the target object selected by the user. In this way, the user only needs to select, on the video picture, a character role that the user wants to view, and a terminal device can quickly obtain a label of the character role, and display the label to the user for viewing. Therefore, the user can view label information of the object of interest in the video picture in real time, which improves user experience. This can resolve the current problem of a poor prompt effect of a prompt subtitle for a character role in a video picture.

It should be noted that an execution body for the method for displaying a label in an image picture provided in this embodiment of this application may be a terminal device, or may be a function module and/or a function entity that are/is in the terminal device and that can implement the method. The execution body may be specifically determined based on an actual use requirement. This is not limited in this embodiment of this application. The following uses an example in which the execution body is the terminal device to describe the method for displaying a label in an image picture provided in this embodiment of this application.

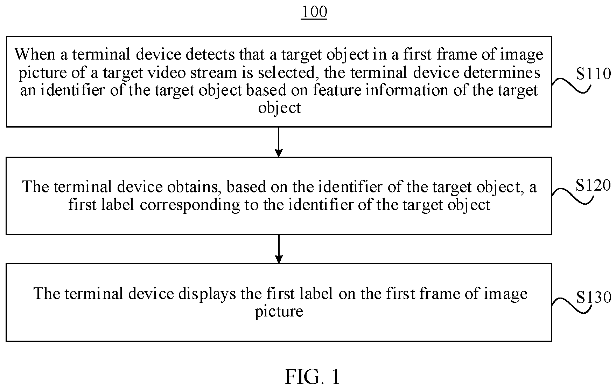

FIG. 1 is a schematic flowchart of a method for displaying a label in an image picture according to an embodiment of this application. Refer to FIG. 1. The method 100 includes the following S110 to S130.

S110: When a terminal device detects that a target object in a first frame of image picture of the target video stream is selected, the terminal device determines an identifier of the target object based on feature information of the target object.

In this embodiment of this application, in a process in which the terminal device plays the target video stream, if a user needs to learn related information about some object in an image picture played in the target video stream, the user may select the target object, to trigger the terminal device to display a label of the object. In this way, the user can learn about the object through the label.

To be specific, the target video stream may include a plurality of image pictures. The plurality of image pictures are continuously played in a process in which the terminal device plays the target video stream. Therefore, to avoid a misoperation, the terminal device may first respond to a user operation (for example, tapping a video pause control), and pause playback of the target video stream, so that a currently played picture stays in the first frame of image picture; and the terminal device may then respond to a user operation (for example, selecting the target object in the first frame of image picture), and display a first label corresponding to the target object on the first frame of image picture, so that the user can learn related information about the target object by using the first label.

Optionally, the target object may be a person, or may be an animal or a plant, or may be a still object such as a building, or may be any other possible object. For example, the target object may also be the frame of image picture. The target object may be specifically determined based on an actual use requirement. This is not limited in this embodiment of this application.

Optionally, in some embodiments, assuming that the target object is an object such as a person or an animal, feature information of the target object may be facial feature information of the target object. In some embodiments, assuming that the target object is an object such as a plant or a building, feature information of the target object may be feature information such as a texture and/or a structure and/or a color of the target object. For ease of description, the following uses an example in which the target object is a character, and the feature information of the target object is facial feature information of the character as an example for description.

Optionally, the identifier of the target object may be an identifier in a character form, an identifier in a digital form, an identifier in a pattern form, or an identifier in any other possible form. The identifier may be specifically determined based on an actual use requirement. This is not limited in this embodiment of this application.

Optionally, in some embodiments, it is assumed that a plurality of image pictures of the target video stream include M objects (M is a positive integer), and each of the M objects corresponds to one identifier. The terminal device may prestore a one-to-one correspondence (referred to as a first correspondence relationship for short) between feature information of the M objects and identifiers of the M objects, where the feature information of the M objects includes the feature information of the target object, and the M identifiers include the identifier of the target object.

For example, the plurality of image pictures of the target video stream includes two character roles, corresponding identifiers of the two character roles are respectively denoted as a character A and a character B, and corresponding feature information of the two character roles is respectively feature information A and feature information B. The terminal device may pre-store a correspondence relationship between the character A and the feature information A, and a correspondence relationship between the character B and the feature information B.

In this embodiment of this application, when the terminal device detects that the target object in the first frame of image picture of the target video stream is selected, the terminal device may capture the image of the target object from the first frame of image picture. The image includes the feature information of the target object. Further, the terminal device may determine the identifier of the target object based on the first correspondence relationship and the feature information of the target object.

For example, that the feature information of the target object is facial feature information (for example, may be a face image) of the character A, the terminal device may perform facial feature matching between the facial feature information of the character A and prestored facial feature information of the M characters, and then may determine, based on the foregoing first correspondence relationship, an identifier corresponding to the facial feature information of the character A.

It should be noted that the first correspondence relationship may also be stored on a server side. Optionally, in some embodiments, the terminal device may request, when necessary, to invoke the first correspondence relationship from the server side, and determine, based on the first correspondence relationship, the object identifier corresponding to the object feature information. In some other embodiments, after obtaining the feature information of the target object, the terminal device sends the feature information of the target object to the server. Then, the server determines the identifier of the target object based on the first correspondence relationship and the feature information of the target object, and then the server sends the identifier of the target object to the terminal device.

That is, how to determine the identifier of the target object may be independently completed by the terminal device locally, or may be completed by the terminal device by interacting with the server. During actual implementation, an implementation of how the terminal device determines the identifier of the target object may be specifically determined based on an actual use requirement. This is not limited in this embodiment of this application.

Optionally, in some embodiments, the step in S110 above where the terminal device detects that the target object in the first frame of image picture of the target video stream is selected may be specifically implemented by using the following Manner 1 or Manner 2. Herein, that the target object is a character, and the feature information of the target object is the facial feature information of the character is used as an example for description.

Manner 1: In response to a third operation of the user, the terminal device displays a selection box in an area in which a face of the target object is located in the first frame of image picture, and determines that the target object is selected.

For example, the third operation may be touching and holding, by the user, the area in which the face of the target object is located in the first frame of image (for example, a pressing operation whose pressing duration exceeds a preset duration) and then releasing a finger. Correspondingly, in response to the third operation, the terminal device displays the selection box on the first frame of image picture centered on the touch and hold location, that is, the target object is selected.

For another example, the third operation may be that the user touches and holds the area in which the face of the target object is located in the first frame of image and moves a finger for a distance, and then releases the finger. Correspondingly, in response to the third operation, the terminal device displays, on the first frame of image picture along a movement track of the finger, a circular selection box whose diameter is a distance from a location where the finger is pressed and held to a location where the finger is released. Alternatively, in response to the third operation, the terminal device may display, along a finger movement track in the first frame of image picture, a rectangular selection box that uses a distance from a position where the finger is pressed and held to a position where the finger is released as a diagonal line.

For another example, the third operation may be that the user drags a preset selection box on a video display interface to the area in which the face of the target object is located, and then releases a finger. Correspondingly, in response to the third operation, the terminal device displays the selection box in the area in which the face of the target object is located.

It should be noted that a specific implementation of the third operation is not limited to the manner described in the foregoing description. During actual implementation, the third operation may be any other possible operation, and may be specifically determined based on an actual use requirement. This is not limited in this embodiment of this application.

Optionally, the selection box may be a round box, or may be a rectangular box, or may be a box in any other possible shape. During actual implementation, a shape of the selection box may be specifically set based on an actual use requirement. This is not limited in this embodiment of this application.

Optionally, the selection box may be scaled down based on a user operation, or may be scaled up based on a user operation. During actual implementation, a display size of the selection box may be specifically set based on an actual use requirement. This is not limited in this embodiment of this application.

Optionally, the selection box may be moved on the video display interface based on a user operation. During actual implementation, how to move the selection box may be specifically set based on an actual use requirement. This is not limited in this embodiment of this application.

Manner 2: In response to a fourth operation of the user, the terminal device displays a face detection box in a face area of each object in the first frame of image picture. Further, when the terminal device detects that the face detection box corresponding to the target object is selected, the terminal device determines that the target object is selected.

For example, the fourth operation may be a tapping operation performed by the user on a label control on a video display interface. Correspondingly, in response to the fourth operation, the terminal device performs facial recognition (namely, facial recognition) on each character image in the current video display interface, displays a face detection frame in a facial image area of each character. If the user needs to view a label corresponding to the character A, the user may select a face detection box displayed in a facial image area of the character A. Correspondingly, in response to the user operation, the terminal device determines that the character A is selected.

It should be noted that possible implementations in which the terminal device detects that the target object in the first frame of image picture of the target video stream is selected are listed above in Manner 1 and Manner 2. During actual implementation, this embodiment of this application is not limited to the foregoing listed manners. This may be specifically determined based on an actual use requirement. This is not limited in this embodiment of this application.

S120: The terminal device obtains, based on the identifier of the target object, a first label corresponding to the identifier of the target object.

In this embodiment of this application, as described above, the plurality of image pictures of the target video stream include the M objects, each of the M objects may correspond to one identifier, and each identifier may correspond to one label. (Certainly, it may alternatively be that some of the identifiers correspond to labels). The terminal device may prestore a one-to-one correspondence (referred to as a second correspondence relationship for short) between the M identifiers and the M labels, where the M identifiers include the identifier of the target object, and the M labels include the first label.

In this embodiment of this application, after determining the identifier of the target object based on the feature information of the target object, the terminal device may obtain, based on the prestored second correspondence relationship, the first label corresponding to the identifier of the target object.

It should be noted that the first label may be a label preset for the target object. For example, the first label may be preset by a system, or may be added in a user-defined manner or set by a user. This may be specifically determined based on an actual use requirement. This is not limited in this embodiment of this application. For a specific implementation of adding a user-defined label, refer to the following description. Details are not described herein again.

It should be further noted that the second correspondence relationship may also be stored on the server side. Optionally, in some embodiments, the terminal device may request, when necessary, to invoke the second correspondence relationship from the server side, and determine, based on the second correspondence relationship, the object label corresponding to the object identifier. In some other embodiments, after obtaining the identifier of the target object, the terminal device sends the identifier to the server, the server obtains the first label based on the second correspondence relationship and the identifier of the target object, and then the server sends the first label to the terminal device.

That is, how to obtain the first label may be independently completed by the terminal device locally, or may be completed by the terminal device by interacting with the server. During actual implementation, an implementation of how the terminal device obtains the object label may be specifically determined based on an actual use requirement. This is not limited in this embodiment of this application.

S130: The terminal device displays the first label on the first frame of image picture.

In this embodiment of this application, when the terminal device detects that the target object in the first frame of image picture of the target video stream is selected, the terminal device obtains the feature information of the target object, determines the identifier of the target object based on the first correspondence relationship and the feature information of the target object, and then obtains, based on the second correspondence relationship and the identifier of the target object, the first label corresponding to the identifier of the target object. In this way, a history label is awakened through man-machine information interaction.

For example, when the terminal device detects that the character A in the first frame of image picture of the target video stream is selected, the terminal device obtains the facial feature information of the character A, determines the identifier of the character Abased on a facial recognition technology and the facial feature information of the character A, and then invokes a label corresponding to the identifier based on the identity of the character A and displays the label to the user for viewing.

Optionally, in some embodiments, S130 may be specifically implemented in the following Manner 1 or Manner 2.

Manner 1: The terminal device may directly display the first label on the first frame of image picture.

Optionally, a display form of the first label (for example, a display color, a display size, display transparency, and/or a display location) may be specifically determined based on an actual use requirement. This is not limited in this embodiment of this application. For example, the first label may be displayed in red font. For another example, the first label may be displayed in blinking mode.

Manner 2: The terminal device may display a label box in the first frame of image picture, and display the first label in the label box.

Optionally, the label box may be a round box, or may be a rectangular box, or may be a box in any other possible shape. During actual implementation, a shape of the label box may be specifically set based on an actual use requirement. This is not limited in this embodiment of this application.

Optionally, the label box may be scaled down based on a user operation, or may be scaled up based on a user operation. During actual implementation, a display size of the label box may be specifically set based on an actual use requirement. This is not limited in this embodiment of this application.

Optionally, the label box may be moved on the video display interface based on a user operation. During actual implementation, how to move the label box may be specifically set based on an actual use requirement. This is not limited in this embodiment of this application.

In some embodiments, the terminal device may display the first label in a display area corresponding to the target object in the first frame of image picture. The display area corresponding to the target object may be an area in a preset range centered on the target object. The preset range may be set based on a specific situation. For example, the preset range may be a circular range with a radius of R (for example, 3 cm). In this case, the display area corresponding to the target object may be a circular area that is centered on the target object and is with a radius of R.

Optionally, the display area may be an area other than an area in which the target object is located in a preset range centered on the target object. For example, the display area may be an area other than an area in which a character A is located in a preset range centered on the character A.

Further, optionally, the display area may be an area other than an area in which a face of the target object is located in a preset range centered on the target object. For example, the display area may be an area other than an area in which a face of a character A is located in a preset range centered on the character A.

It should be noted that the method provided in this embodiment of this application may be applied to a scenario in which a label is displayed for a single object, or may be applied to a scenario in which a plurality of labels are displayed for a plurality of objects. The following describes the two application scenarios as examples by using the following first embodiment and second embodiment.

### First embodiment: [A target object is a single object]

In the first embodiment, for a scenario in which a user needs to view a label of a single object in a video picture, the target object is the single object, and a first label is a label for the single object. A terminal device may obtain feature information of the single object in response to a trigger operation (for example, the foregoing third operation or the foregoing fourth operation) of the user, determine, based on a first correspondence relationship, an identifier corresponding to the feature information of the single object; and then obtain, based on a second correspondence relationship, the first label corresponding to the identifier.

According to the solution provided in the first embodiment, an avatar of a specified character (which may be matched based on a facial recognition result and a screen touch point location) can be extracted. A mobile phone only needs to identify a face in a range around the screen touch point of the user for capturing, and quickly displays a custom label of a specified character in a frame. In this way, an amount of data transmitted between the mobile phone and a server is reduced, and a search speed is higher. In this way, the user only needs to select a to-be-viewed artist on the display by using a screen interaction touch point manner, and the terminal device can quickly obtain a label of the artist, and display the label to the user for viewing, thereby improving user experience.

### Second embodiment: [A target object includes a plurality of objects]

In the second embodiment, for a scenario in which a user needs to view labels of a plurality of objects in a video picture at once, the target object includes the plurality of objects, and a first label includes labels respectively corresponding to the plurality of objects. The terminal device determines, in response to an operation (for example, tapping a control used to trigger display of all labels) performed by the user on a first frame of image picture of a target video stream, that a plurality of objects in the first frame of image picture are selected, where the plurality of objects include the target object; obtains an identifier of each object based on a first correspondence relationship and feature information of each object in the plurality of objects; then obtains, based on a second correspondence relationship and the identifier of each of the plurality of objects, a label corresponding to the identifier of each object, that is, obtains a plurality of labels; and further displays the plurality of labels on the first frame of image picture, where the plurality of labels include the first label.

In the second embodiment, the terminal device may display a corresponding label for each of the plurality of objects in the video picture, and may respectively display the plurality of labels correspondingly at a location of an area in which the objects are located, to facilitate identification by the user.

It should be noted that a manner of capturing facial feature information (a picture) of a character in the second embodiment is different from that in the first embodiment. Full-screen character facial recognition is used in the second embodiment, and specified character facial recognition is used in the first embodiment.

According to the solution provided in the second embodiment, full-screen character facial recognition may be performed, a complete frame is recognized, and a face is captured. An advantage of this solution is that custom labels of all characters in the frame may be queried back at once, thereby reducing a quantity of user interaction times.

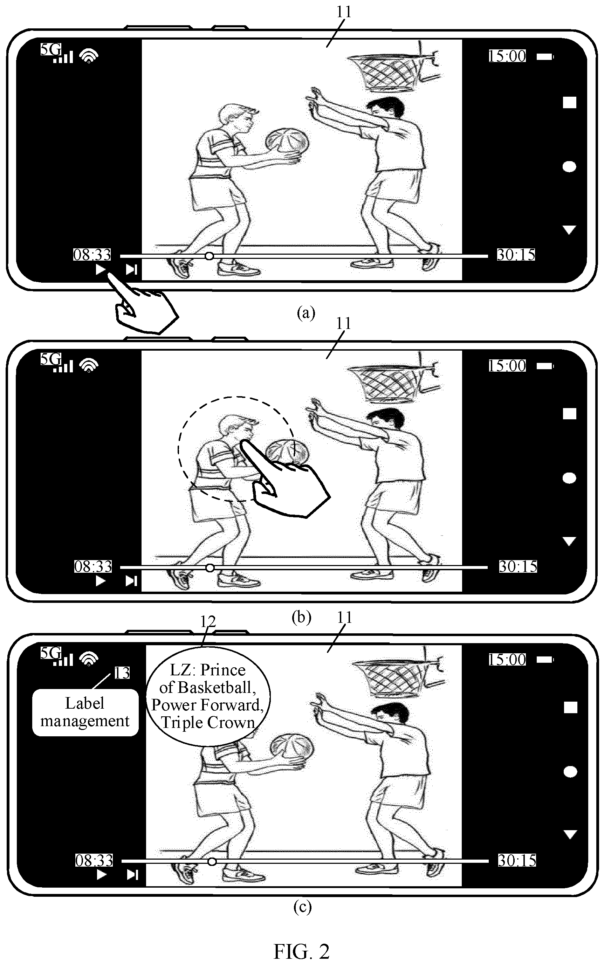

The following describes an example of a specific implementation of the foregoing label display method with reference to FIG. 2. As shown in (a) in FIG. 2, it is assumed that a mobile phone currently pauses playing a video, and currently displays a frame of image picture 11. As shown in (b) in FIG. 2, if a user touches and holds a character image in the image picture 11, the mobile phone may display a selection box (for example, a dotted circle box) around the character image in response to a user operation. As shown in (c) in FIG. 2, after a finger of the user leaves a screen, the mobile phone may display a corresponding label 12 "LZ: Prince of Basketball, Power Forward, Triple Crown" on a side of the character image. The label may be a preset label, or a label previously set by the user. By viewing the label, the user may obtain information about the character. In addition, as shown in (c) in FIG. 2, a "label management" control 13 may be further displayed on a video playback screen of the mobile phone, and functions such as adding a label, displaying a stored label (for example, a label list), editing a label, and deleting a label may be supported. The functions of adding a label, displaying a stored label, and editing a label are described in detail below.

Compared with effects of weak pertinence due to complex information in a manner of displaying character role information by using barrage in a related technology, according to the method provided in this embodiment of this application, a corresponding first label may be displayed in a video picture for a target object selected by a user, pertinence is strong, and a prompt effect is better. The user only needs to select, on the video picture, a character role that the user wants to view, and the terminal device can quickly obtain a label of the character role, and display the label to the user for viewing. Therefore, the user can view label information of an object of interest in the video picture in real time, thereby improving user experience.

An embodiment of this application provides a method for displaying a label in an image picture. When it is detected that the target object in a first frame of image picture of a target video stream is selected, an identifier of a target object based on feature information of the target object is determined; and a first label corresponding to the identifier of the target object is displayed on the first frame of image picture. According to the foregoing solution, when selecting a target object (for example, a character role) in a video picture, a user first identifies the target object based on the feature information of the target object, and determines the identifier of the target object. Because there is a correspondence relationship between the identifier of the target object and the first label (the first label may be a system preset label or a user-defined label), the corresponding first label may be displayed in the video picture for the target object selected by the user. In this way, the user only needs to select, on the video picture, a character role that the user wants to view, and a terminal device can quickly obtain a label of the character role, and display the label to the user for viewing. Therefore, the user can view label information of the object of interest in the video picture in real time, which improves user experience. This can resolve the current problem of a poor prompt effect of a prompt subtitle for a character role in a video picture.

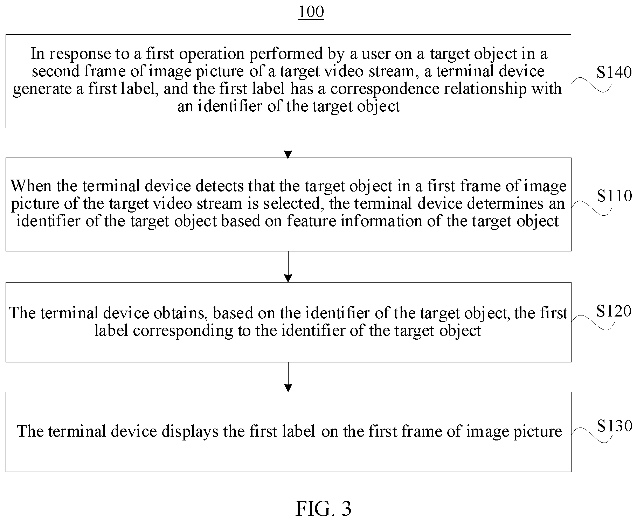

Optionally, the user may add a label for a character role or plot for personalized evaluation, and the user can view the label in real time. The first label may be a custom label pre-added by the user for the target object. To be specific, when the terminal device plays the target video stream, if the user needs to add the label to the target object in the playback screen, an operation may be performed on the target object. Correspondingly, the terminal device may generate, in response to the user operation, a corresponding first label for the target object, and storing a correspondence relationship between an identifier of the target object and the first label. For example, with reference to FIG. 1, as shown in FIG. 3, before S110, the method 100 further includes S140.

S140: In response to a first operation performed by a user on a target object in a second frame of image picture of a target video stream, a terminal device generates a first label, and the first label has a correspondence relationship with an identifier of the target object.

Through this solution, personalized information such as a label may be added at any time for a character role in a movie frame. Certainly, in this embodiment of this application, personalized information such as a label can be added at any time for a plot in a movie frame.

The second frame image picture may be the same as the first frame image picture, or may be different from the first frame image picture. For example, in different cases, the second frame of image picture may be a frame before the first frame of image picture. That is, after the first label is added, if a picture after a current picture includes the target object, the first label may be invoked. Alternatively, the second frame of image picture may be a frame after the first frame of image picture. That is, after the first label is added, if a picture before a current picture includes the target object, the first label may still be invoked.

In some embodiments, the foregoing first operation may be an operation that the user selects a target object and enters (for example, enters in a character entering manner, or enters in a selection manner) label description information. For a description of detecting, by the terminal device, that the target object is selected, refer to the detailed description of detecting, by the terminal device, that the target object in the first frame image of the target video stream is selected in S 110. Details are not described herein again.

In some embodiments, when the terminal device detects a first operation performed by the user on the target object in the second frame of image picture of the target video stream, the terminal device further obtains the feature information (for example, the facial feature information) of the target object, determines the identifier of the target object based on the feature information, and then stores the first label in association with the identifier of the target object. In this way, the terminal device may add a label to an object in the image picture based on a user requirement, and store a correspondence relationship between the label and the object. In this way, when the terminal device plays the target video stream, and when the user has a requirement of viewing role information of an object, the user only needs to select an object to trigger the terminal device to display a corresponding label. In this way, the user can view a label of any object in the image picture at any time based on a requirement, to learn of role information of any object.

In some other embodiments, the terminal device may send the first label and the feature information of the target object to the server, and the server may determine the identifier of the target object based on the feature information of the target object, and store the first label in association with the identifier of the target object. In this way, when the user selects an object to view a label of the object, the terminal device may obtain feature information of the object, and send the feature information of the object to the server. The server determines an identifier of the target object based on the feature information of the object, obtains a first label corresponding to the identifier of the target object, and then sends the first label to the terminal device.

When the terminal device pauses playing a movie, if the user selects a role (also referred to as an artist, an actor, or a character role) in the movie, the terminal device may pop up an edit box, and the user enters label information in the pop-up edit box, and taps a "submit" or "confirm" control. Then, the terminal device submits the character facial feature information (a picture) and the label information edited by the user to the server. The server identifies the role identifier based on role feature information, establishes an association relationship between a movie watcher, the role identifier, and the label information submitted by the user, and stores the association relationship. In a process in which the user continues to watch the movie, the user can pause the playback at any time, select a role in the movie, and view corresponding historical label information.

It should be noted that, when generating the first label, the terminal device may display the first label in the first frame of image picture, and hide the first label after the first frame of image picture is switched to another image picture, to avoid interference caused by frequent occurrence of the label in an image picture to the user. Certainly, when generating the first label, the terminal device may not display the first label, and display the first label only when triggered by the user.

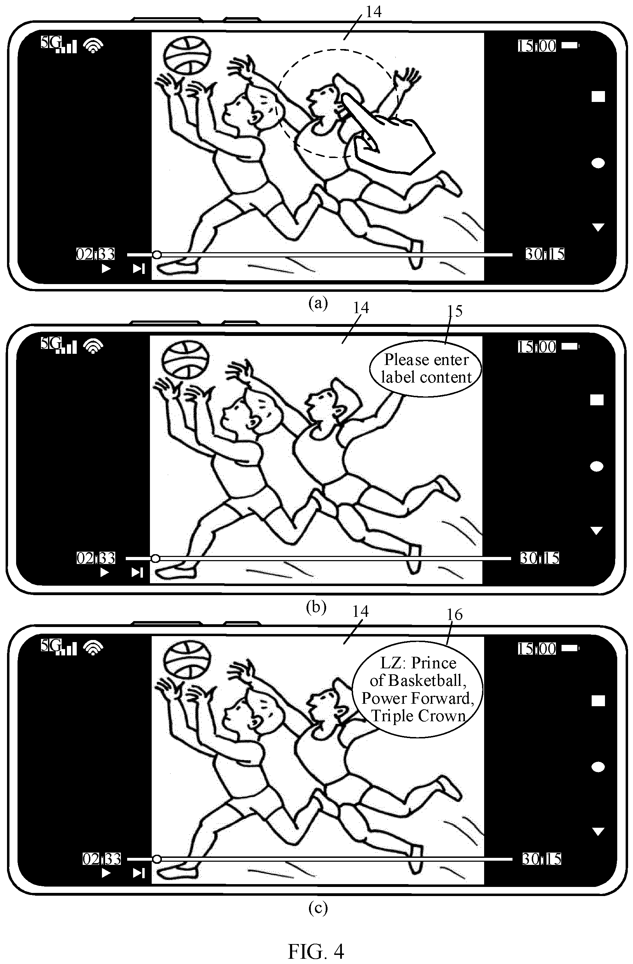

The following describes an example of a specific implementation of the label adding step with reference to FIG. 4. As shown in (a) in FIG. 4, it is assumed that a mobile phone currently pauses playing a video and currently displays a frame of image picture 14. If a user touches and holds a character image in the image picture 14, the phone may display a check box (for example, a dotted circular box) around the character image in response to the user action. As shown in (b) in FIG. 4, after a finger of the user leaves a screen, the mobile phone displays a blank label window 15 on a side of the character image, and prompts the user to enter label content. As shown in (c) in FIG. 4, if the user enters the label content in the label window 15, the mobile phone displays a user-defined label 16 "LZ: Prince of Basketball, Power Forward, Triple Crown".

According to the foregoing solution, the user is allowed to add a character (artist) label in a movie watching process, and view the label at any time. It is convenient for the user to review role information/a plot in a timely manner. Therefore, the solution provided in this embodiment of this application can improve movie watching smoothness and user experience.

Optionally, in some embodiments, in response to an operation of adding a label triggered by a user, the terminal device may record an adding time of the label, that is, playback progress of the target video stream that is obtained when the label is generated. In this way, when the target video stream is played again, the label may be displayed based on recorded label time information. The label time information indicates playback progress of the target video stream that is obtained when the first label is generated.

Specifically, when the terminal device plays the target video stream again and current playback progress reaches the playback progress indicated by the label time information, the terminal device may determine the corresponding first label based on the label time information, and display the first label in the first frame of image picture to indicate role information of the target object. Alternatively, the terminal device may send, to a server, a request message used to request the label indicated by the label time information. Then, the server may obtain the corresponding first label based on the label time information, and then the server sends the first label to the terminal device, so that the terminal device obtains the first label and displays the first label.

For example, total playback duration of the target video stream is one hour. When the target video stream is played for 15 minutes, the terminal device generates a label A for a character A (that is, the target object) in response to an operation of adding a label by the user, and records that current playback progress is 15 minutes (that is, the label time information). When the target video stream is played again and playback progress reaches 15 minutes, the terminal device may display the label A, where the label A indicates role information of the character A. In this way, the label is automatically displayed during replay, and display does not need to be manually triggered by the user, thereby improving convenience of man-computer interaction.

Different from a barrage effect, in this solution of this application, a corresponding label may be displayed for a character role based on a user requirement, or a label may be displayed during replay at a time point when the label is added.

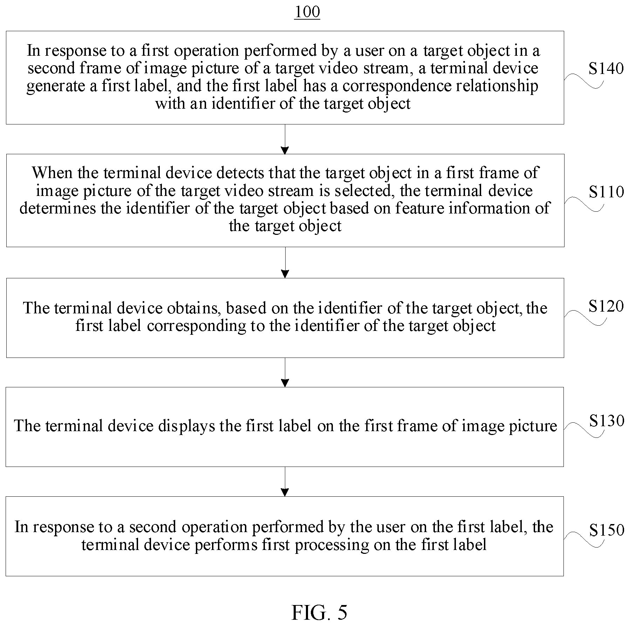

In some embodiments, for a label added by a user in an image picture or a label preset by a system, a terminal device may perform some processing on the label based on a user requirement. For example, with reference to FIG. 1, as shown in FIG. 5, after S130, the method 100 further includes S150.

S150: In response to a second operation performed by the user on the first label, the terminal device performs first processing on the first label.

Optionally, the first processing may be any one of the following: updating content of the first label; updating a display location of the first label; sharing the first label; hiding the first label; and deleting the first label.

Optionally, different second operation corresponds to different first processing.

For example, when the second operation is an operation for triggering editing or modification of the first label, for example, the user taps an editing label control, the terminal device may update content of the first label in response to the second operation.

For another example, when the second operation is an operation for triggering movement of the first label, for example, the user drags the first label, the terminal device may update a display location of the first label in response to the second operation.

For another example, when the second operation is an operation for triggering sharing of the first label with another user equipment, for example, the user taps a label sharing control, the terminal device may send the first label to another user terminal or platform in response to the second operation, to implement label sharing. In this way, the user may choose, based on an actual requirement, whether to upload and share a user-defined label with another user. In this way, in this solution of this application, a label added by the user may be shared with another user for viewing, and a label added by the another user for the artist may also be viewed.

For another example, when the second operation is an operation for triggering hiding the first label, for example, the user taps a label hiding control, the terminal device may hide the first label in response to the second operation. In this case, the first label is invisible to the user. If the user needs to view the first label again, the user may select the target object as described above, and trigger the terminal device to display the first label again.

For another example, when the second operation is an operation for triggering deleting the first label, for example, the user taps a label deleting control, the terminal device may delete the first label in response to the second operation. After the first label is deleted, the user cannot invoke the first label again in the foregoing manner.

It should be noted that a user-defined label is user data, and is a label that needs to be deleted timely during user deregistration and can be retained for a maximum of a short period of time (for example, half a year, subject to privacy requirements).

Optionally, when the user edits the label, the terminal device may prompt a label keyword by displaying a knowledge graph or a user profile, and allow the user to perform label editing in a manner of selecting the label keyword, thereby reducing time consumed for manual input by the user. In addition, on the premise that privacy allows, a corresponding prompt may be provided based on a preset user profile. For example, the user often watches a fitness video, and a "fitness" label is preset in the user profile. When the user adds a label to an "Actor XX", the mobile phone may provide a prompt of "The actor XX goes to the gym to exercise two to three times a week" and other related information, which is used by the user when marking the label.

According to the foregoing solution, during movie watching, the user may edit a label for a character or an actor in a video based on personal movie watching experience, and the user may view, modify, share, or delete the label at any time, which improves flexibility of label application.

In conclusion, according to the solution provided in this application, a user-level video label is allowed to be added in a video playback process, and a user is allowed to view or edit the label in a subsequent video playback process. This resolves a current problem of a poor prompt effect of a prompt subtitle of a character role in a video picture.

In some embodiments, when the terminal device generates a label, the terminal device may correspondingly store the label in association with a frame of image picture or a video clip in the target video stream. The label mentioned herein may be a user-defined label added by a user, or may be a label preset by a system. For example, the terminal device may store the first label in association with first video playback information. First video content indicated by the first video playback information may be the first frame of image picture, or may be a first video clip that has preset playback duration and includes the first frame of image picture. The preset playback duration may be specifically set based on an actual requirement. This is not limited in this embodiment of this application. In this way, video content indicated by video play information stored associated with a label may be quickly searched for or located for playback based on the label.

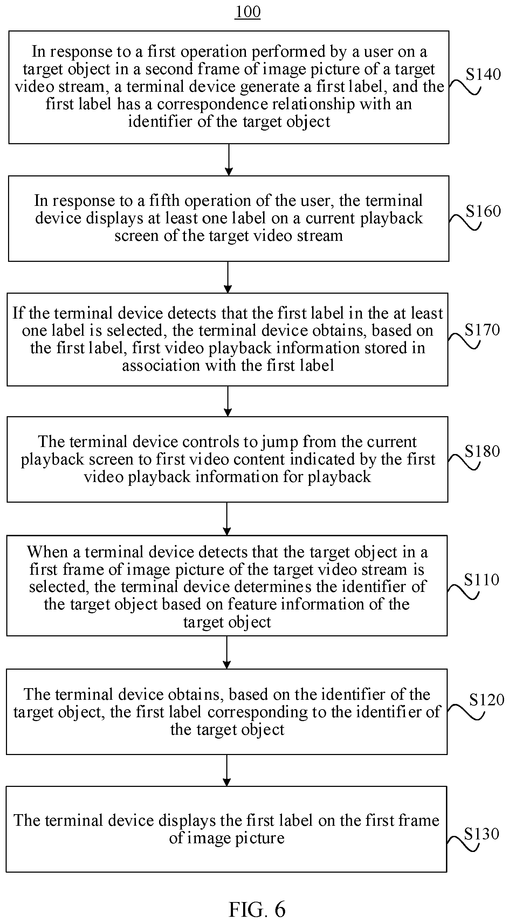

Optionally, in some embodiments, the terminal device may directly display, on a current playback screen of the target video stream, labels respectively corresponding to a plurality of objects in the target video stream for the user to select. In some other embodiments, after triggered by a user operation, the terminal device may display a plurality of labels on the current playback screen of the target video stream for the user to select. When the user selects one of the labels, the terminal device may quickly locate a corresponding picture or video clip based on the label, so that user experience can be improved. For example, with reference to FIG. 3, as shown in FIG. 6, after S140, the method 100 further includes the following S160 to S 180.

S160: In response to a fifth operation of the user, the terminal device displays at least one label on a current playback screen of the target video stream.

For example, the terminal device may display, in a label display box or a label list, a label previously set by the user for the user to view, or may edit the label based on a user requirement and continue to save the label.

In this embodiment of this application, each of the at least one label corresponds to one frame of image picture or one video clip in the target video stream. The fifth operation of the user may be an operation (for example, a tap operation) performed by the user on a button in the playback screen, and is for triggering displaying at least one label in the playback screen. For example, the at least one label may be displayed in a form of a label list.

Optionally, the at least one label includes the first label, or may include a user-defined label added by the user for an object in the target video stream, or may include a label preset by a system. This may be specifically determined based on an actual use requirement. This is not limited in this embodiment of this application. For example, the at least one label includes a first label added by the user for a first object in the target video stream, a second label added for a second object in the target video stream, and a third label added for a third object in the target video stream.

S170: If the terminal device detects that the first label in the at least one label is selected, the terminal device obtains, based on the first label, first video playback information stored in association with the first label.

For example, in response to a tap operation performed by the user on the first label in the at least one label, the terminal device detects that the first label is selected, and further, the terminal device may locally invoke a prestored association relationship between the first label and first video playback information, and obtain the corresponding first video playback information based on the first label. Alternatively, the terminal device may send, to a server, a request message used to request video playback information corresponding to the first label. Then, the server may invoke a prestored association relationship between the first label and the first video playback information, and obtain the corresponding first video playback information based on the first label, and then the server sends the first video playback information to the terminal device, so that the terminal device obtains the first video playback information.

S180: The terminal device controls to jump from the current playback screen to first video content indicated by the first video playback information for playback.

In this embodiment of this application, when the first label is selected, the terminal device may obtain, based on the first label, the first video playback information stored in association with the first label, so that the terminal device can quickly locate the first video content indicated by the first video playback information for playback.

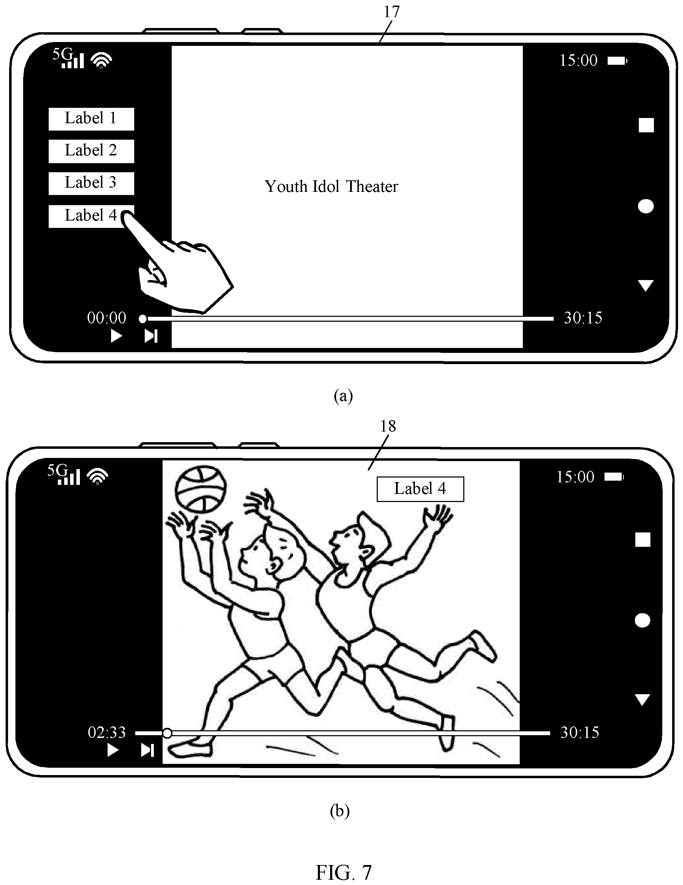

According to the foregoing solution, the user may select a character label from the label list, to trigger the mobile phone to quickly locate a related plot segment corresponding to the character label. For example, as shown in (a) in FIG. 7, four labels are displayed in a label list of a TV series "Youth Idol Theater": a label 1, a label 2, a label 3, and a label 4. If the user wants to watch a plot segment, for example, there is a correspondence relationship between the plot segment and the label 4, the user may select the label 4 from the label list. As shown in (b) in FIG. 7, in response to the user operation, the mobile phone may jump from the current video display interface 17 to the plot segment (a video display interface 18) corresponding to the label 4 for playback, which is quick and convenient.

In the foregoing embodiment, the terminal device uses a manner of displaying a plurality of labels for the user to select, and quickly finds, based on a label selected by the user, video content indicated by video playback information stored in association with the label. In some other embodiments, the terminal device may further determine, based on label search information entered by the user, a label that has a highest matching degree with the label search information, and quickly find, based on the label, video content indicated by video playback information stored in association with the label for playback.

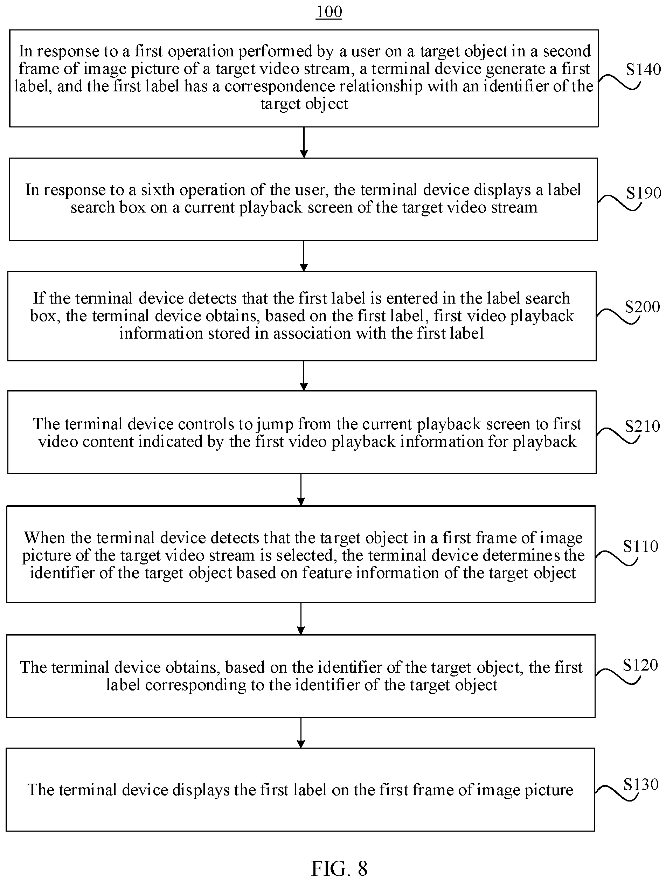

Optionally, in some embodiments, the terminal device may directly display a label search box on the current playback screen of the target video stream for the user to enter label search information. In some other embodiments, after triggered by a user operation, the terminal device may display a label search box on the current playback screen of the target video stream for the user to enter label search information. When the user enters the label search information, the terminal device may quickly locate a corresponding picture or video clip based on the label search information. In this way, user experience can be improved. For example, with reference to FIG. 3, as shown in FIG. 8, after S140, the method 100 further includes the following S190 to S210.

S190: In response to a sixth operation of the user, the terminal device displays a label search box on a current playback screen of the target video stream.

For example, the sixth operation of the user may be an operation (for example, a tapping operation) performed by the user on a button in the playback screen, and is for triggering displaying a label search box in the playback screen. For example, the label search box may be a rectangular box.

S200: If the terminal device detects that the first label is entered in the label search box, the terminal device obtains, based on the first label, first video playback information stored in association with the first label.

For example, in response to an input operation of the user in the label search box, the terminal device determines that entered content has a highest matching degree with the first label, and then the terminal device locally invokes a prestored association relationship between the first label and the first video playback information, to obtain the corresponding first video playback information based on the first label. Alternatively, the terminal device may send, to a server, a request message used to request video playback information corresponding to the first label. Then, the server may invoke a prestored association relationship between the first label and the first video playback information, and obtain the corresponding first video playback information based on the first label, and then the server sends the first video playback information to the terminal device, so that the terminal device obtains the first video playback information.

S210: The terminal device controls to jump from the current playback screen to first video content indicated by the first video playback information for playback.

In this embodiment of this application, when the user enters the first label in the label search box, the terminal device may obtain, based on the first label, the first video playback information stored in association with the first label, so that the terminal device can quickly locate the first video content indicated by the first video playback information for playback.

According to the foregoing solution, a movie segment may be searched for based on an actor label. For example, the user needs to view a plot of a character A in a movie "yyy". When the mobile phone displays a video playback screen of the movie "yyy", the user only needs to enter a keyword "A" in the label search box to trigger the mobile phone to jump to the corresponding movie segment for playback, which is fast and convenient.

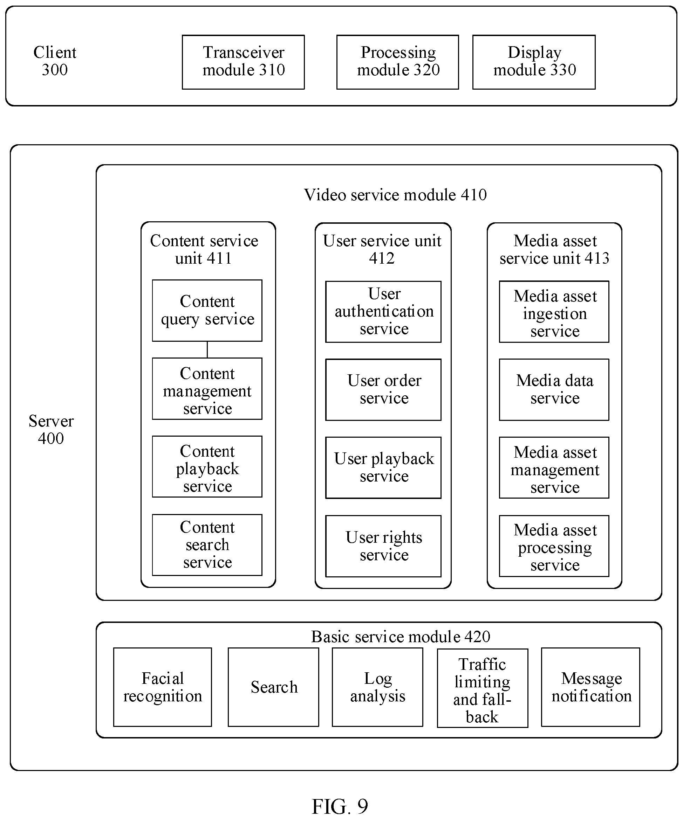

FIG. 9 is a schematic diagram of a system architecture applied to a method for displaying a label in an image picture according to an embodiment of this application. As shown in FIG. 9, a system architecture includes two parts: a client 300 and a server 400. The client 300 includes a transceiver module 310, a processing module 320, and a display module 330. The server 400 includes a video service module 410 and a basic service module 420. The transceiver module 310 is configured to perform information exchange with the server 400, for example, configured to send feature information of a target object to the server 400, and configured to receive a first label sent by the server 400 based on the feature information of the target object. The processing module 320 is configured to process label-related data, and the display module 330 is configured to display the first label.

For example, the client 300 may include the terminal device mentioned in the foregoing embodiment, for example, a mobile phone or a tablet computer (portable android device, PAD).

The server 400 may be a cloud service cluster. For example, the video service module 410 may include the following units: (1) a content service unit 411 that provides a content query service, a content management service, a content playback service, and a content search service, that is, may support capabilities such as movie online and offline management, movie information management, and movie playback authentication; (2) a user service unit 412 that provides a user authentication service, a user order service, a user playback service, and a user rights service, that is, can support capabilities such as login authentication, membership purchase and rights management, and favorites playback management; and (3) a media asset service unit 413 that provides a media asset ingestion service, a media asset data service, a media asset management service, and a media asset processing service, that is, may support capabilities such as video source processing and video ingestion. The basic service module 420 provides some common capabilities, such as facial recognition, information search, log recording and analysis, microservice traffic limiting and fall-back, and message notification.

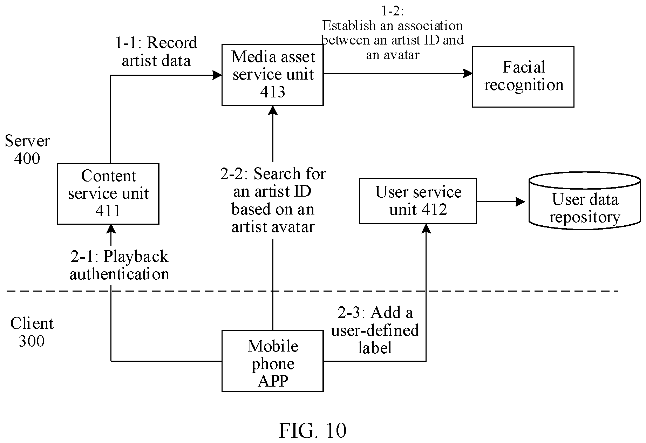

FIG. 10 is a basic flowchart of implementing, by interaction between a client and a server, a method for displaying a label in an image picture according to an embodiment of this application. An example in which an object in an image picture is a character (or referred to as an artist) is used to describe the method provided in this embodiment of this application. With reference to FIG. 9, as shown in FIG. 10, a specific procedure of the foregoing method is as follows.

First, a process in which the server 400 loads video data and establishes a face library is described.

1-1: The media asset service unit 413 transcodes a video and imports the video into a database, and the content service unit 411 releases a video (for example, a movie or a TV series), and records artist information or data.

1-2: The media asset service unit 413 associates, based on the artist information, the artist avatar with an identity document (identity document, ID): the artist avatar-artist ID, that is, the first correspondence relationship in the foregoing embodiment, to create a face library or avatar library.

Next, a process in which the client 300 interacts with the server 400 when the client 300 plays a video is described.

2-1: When a terminal device (such as a mobile phone) of the client 300 plays a video by using an APP with a video playback function, the mobile phone obtains, from the content service unit 411, a uniform resource locator (uniform resource locator, URL) used to play the video, and the content service unit 411 correspondingly performs membership identity authentication on the mobile phone (user ID).

2-2: If the user triggers the mobile phone to pause playing the video, the user performs an operation (for example, touch and hold) on an artist avatar of a video picture to trigger facial recognition, so that the mobile phone can intelligently artist capture facial feature information (for example, an image or a picture), and search the media asset service unit 413 for an artist ID. In the facial recognition triggering manner, an "extract" button may be provided. When the user taps the button, and when a finger touches a screen, the mobile phone is triggered to: perform facial recognition on an image near a touch point (an image in a preset range centered on the touch point), obtain artist facial feature information, and display a label window (for example, a label box).

2-3: The user edits content in a pop-up tab window and submits the edited content to the server 400. The user service unit 412 records the edited content in a structured data store (structured data store, SDS) library. When the mobile phone plays the video, if the user triggers the mobile phone to pause playing the video and taps a label switch, the mobile phone displays whether there is a previously set label for the artist on a current screen. If there is the previously set label for the artist on the current screen, the mobile phone displays a label window to the user, and allows the user to modify, share, delete, and the like, the previously set label for the artist on the current screen. In this way, according to the solution provided in this embodiment of this application, in a process in which the terminal device plays a video stream, functions such as adding, viewing, modifying, sharing, and deleting a user-defined label may be supported.

In this embodiment of this application, before the movie is released, a face library may be established for a main artist/character role of the movie, and stored on a server side. The client integrates a facial detection API in a video APP to extract artist facial feature information (for example, captures an image or a picture) from a still picture and provides the artist facial feature information to the server side. The server side integrates a facial search capability, obtains an artist identifier by performing comparison in the face library based on artist facial feature information provided by the client, and returns the artist identifier to the client. The client may add, modify, and/or delete a personalized description (that is, label information) for the artist identifier in the video APP based on a user operation, and a user service module on the server side manages related data.

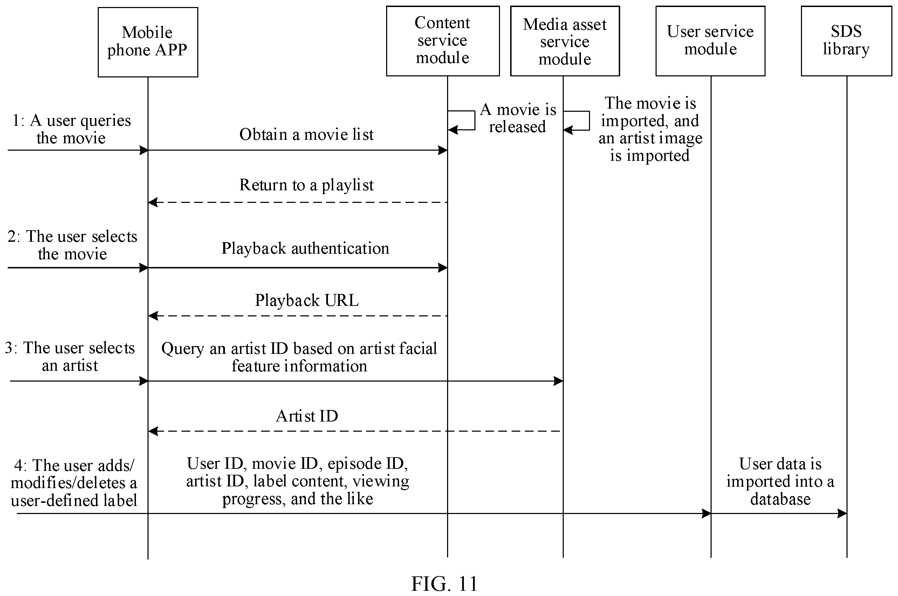

FIG. 11 is a time sequence flowchart of implementing, by interaction between a client and a server, a method for displaying a label in an image picture according to an embodiment of this application. The following describes, with reference to FIG. 10 and FIG. 11, an example of the method for displaying a label in an image picture according to an embodiment of this application.

A media asset service module encodes and decodes a purchased movie, imports the movie into a database, and creates an avatar library for all artists in the movie. A content service module releases the movie. As in step 1 of FIG. 11: A user queries the movie, and after logging in to a mobile phone APP and purchasing a membership, the user can obtain a movie list, view and watch a video online. As in step 2 of FIG. 11: When a user selects a movie, a mobile phone needs to complete a playback authentication process: querying, based on a movie ID, a content service module whether the user has playback permission and then playing the movie. As in step 3 of FIG. 11: The user selects an artist. In a process of playing a movie on the mobile phone, the mobile phone may respond to a user operation and capture a specified or instantaneous character avatar or obtain all character avatars from a frame image in a facial detection manner, and send an avatar image to a media asset service module. Correspondingly, the media asset service module completes facial comparison by using a preset avatar library and returns an artist ID to the mobile phone. As in step 4 of FIG. 11: The user defines a label: If the user adds a user-defined label to an android application package (android application package, APK), the mobile phone may transfer a user ID, a movie ID, an artist ID, and label content to the user service module, and perform storing by using a data repository.

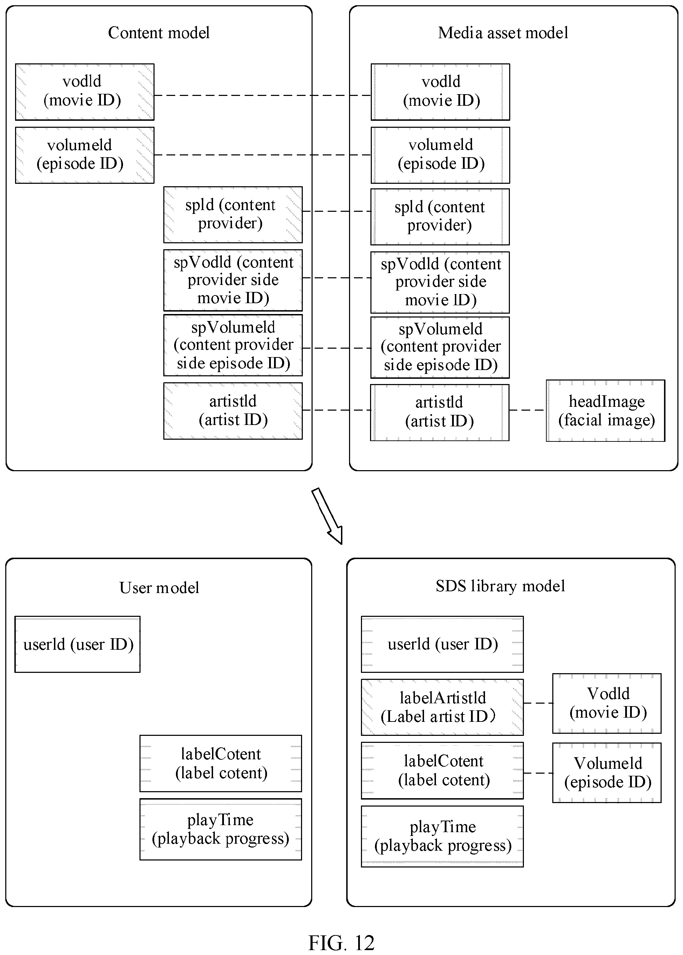

FIG. 12 is a diagram of a data model applied to a method for displaying a label in an image picture according to an embodiment of this application. As shown in FIG. 12, a data model of a user-defined label includes the following three parts:
(1) user information, including a user ID, label content, and playback progress in a user model;
(2) movie information, including a movie ID, an episode ID in a media asset model, and the like; and
(3) artist information, including an artist ID in a content model.

The user information, the movie information, and the artist information may be stored in association in an SDS library model.

It should be noted that, in this embodiment of this application, there is a fixed quantity of main artists (character roles) of each movie, and an association file may be first established for an artist still and an artist ID. Artist facial feature information in a frame of image of the movie is compared with a face in the file, and may be used to identify the corresponding artist. In this way, recognition performance can be improved. In addition, when a user adds a label, the user can trigger the mobile phone to pause playback, tap an "extract" control, and select an artist avatar. The mobile phone captures an artist facial feature information by using a facial image extraction technology, and uploads the facial feature of the avatar to a media asset service module for avatar recognition. Further, the mobile phone quickly identifies main artist avatars in a complete picture by using an existing facial detection technology. A media asset service module of the server obtains a group of artist facial feature information sent by the mobile phone, finds, based on an existing facial recognition technology, a face with a highest matching degree from a face library of the video/episode, further obtains a corresponding artist ID, and returns the artist ID to a client side. For the recognized artist, the user edits label content and taps a "submit" control to trigger the mobile phone to submit the label content to the server. A user service module of the server may record a user ID, an artist ID, or an episode ID of the label, and also records a time point at which the label is added. In this way, the label can be automatically displayed based on the playback time point during video replay. Further, in the process of playing the movie on the mobile phone, if the user wants to view a label of an artist in the current frame, playback may be paused (to prevent skipping to another frame which is without the artist), and then tap a label control. The mobile phone scans an artist avatar of the current frame and sends the artist avatar to the media asset service module of the server to obtain an artist ID. The mobile phone interacts with the user service module, queries a user-defined label of the artist ID based on a user ID, an artist ID, a movie ID, or an episode ID, and displays the user-defined label on a screen of the mobile phone.

Embodiments described in this specification may be independent solutions, or may be combined based on internal logic to achieve different technical effects. All these solutions fall within the protection scope of this application.

A specific structure of an execution body of the methods provided in embodiments of this application is not particularly limited in embodiments of this application, provided that a program that records code of the methods provided in embodiments of this application can be implemented based on the methods provided in embodiments of this application by running. It may be understood that the methods and operations implemented by the server in the foregoing method embodiments may also be implemented by a component (for example, a chip or a circuit) that can be used by the server. The methods and operations implemented by the client in the foregoing method embodiments may also be implemented by a component (for example a chip or a circuit) that can be used by the client. For example, the method provided in this embodiment of this application may be executed by a terminal device, or a function module that is in the terminal device and that can invoke and execute a program. To implement the functions in the methods provided in embodiments of this application, the terminal device may include a hardware structure and/or a software module, and implement the foregoing functions in a form of a hardware structure, a software module, or a hardware structure plus a software module. Whether a function in the foregoing functions is executed in a manner of a hardware structure, a software module, or a hardware structure plus a software module depends on a specific application and a design constraint condition of the technical solution.

The foregoing describes the method embodiments provided in this application, and the following describes apparatus embodiments provided in this application. It should be understood that the description of the apparatus embodiments corresponds to the description of the method embodiments. Therefore, for content that is not described in detail, refer to the foregoing method embodiment. For brevity, details are not described herein again.

The foregoing mainly describes the solutions provided in embodiments of this application from a perspective of interaction between devices. It may be understood that, to implement the foregoing functions, each device, for example, a client device or a server device, includes a corresponding hardware structure and/or a corresponding software module for performing each function. A person skilled in the art should be aware that units and algorithm steps in the examples described with reference to the embodiments disclosed in this specification can be implemented in a form of hardware or a combination of hardware and computer software in this application. Whether a function is executed in a manner of hardware or computer software driving hardware depends on a specific application and a design constraint condition of the technical solution. A person skilled in the art may use different methods to implement the described functions for each particular application, but it should not be considered that the implementation goes beyond the protection scope of this application.

In this embodiment of this application, a client device or a server device may be divided into function modules based on the foregoing method examples. For example, each function module may be obtained through division based on each corresponding function, or two or more functions may be integrated into one processing module. The foregoing integrated module may be implemented in a form of hardware, or may be implemented in a form of a software function module. It should be noted that the module division in this embodiment of this application is an example, and is only logical function division. During actual implementation, there may be another feasible division manner. The following uses an example in which function modules are obtained through division corresponding to each function as an example for description.

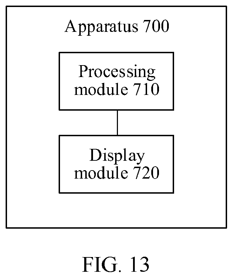

FIG. 13 is a schematic block diagram of an apparatus 700 for displaying a label in an image picture according to an embodiment of this application. The apparatus 700 may be configured to perform an action performed by the client in the foregoing method embodiment. The apparatus 700 includes a processing module 710 and a display module 720. The processing module 710 is configured to perform a processing-related operation on a client side in the foregoing method embodiment. The display module 720 is configured to perform a content display-related operation on the client side in the foregoing method embodiment.

The processing module 710 is configured to: when it is detected that the target object in a first frame of image picture of a target video stream is selected, determine an identifier of a target object based on feature information of the target object; and the display module 720 is configured to display a first label corresponding to the identifier of the target object on the first frame of image picture.

In some embodiments, the processing module 710 is further configured to generate, in response to a first operation performed by a user on a target object in a second frame of image picture of a target video stream, a terminal device generates a first label, and the first label has a correspondence relationship with an identifier of the target object.

In some embodiments, the processing module 710 is further configured to perform first processing on the first label in response to the second operation performed by the user on the first label.

The first processing is any one of the following: updating content of the first label; updating a display location of the first label; sharing the first label; hiding the first label; and deleting the first label.

In some embodiments, the display module 720 is specifically configured to display the first label in a display area corresponding to the target object in the first frame of image picture, where the display area is located in a preset range centered on the target object.

In some embodiments, the display module 720 is specifically configured to display a label box on the first frame of image picture, and display the first label in the label box.

In some embodiments, the identifier of the target object is determined based on a correspondence relationship between at least one piece of feature information and at least one identifier, and the at least one piece of feature information is in a one-to-one correspondence with the at least one identifier; and the at least one piece of feature information includes feature information of the target object, and the at least one identifier includes the identifier of the target object.

In some embodiments, the feature information of the target object is facial feature information of the target object.

In some embodiments, the display module 720 is further configured to display, in response to a third operation performed by the user on the first frame of image picture, a selection box in an area in which a face of the target object is located in the first frame of image picture; and the processing module 710 is further configured to: when a selection box is displayed in an area in which a face of the target object is located, determine that the target object is selected.

Alternatively, the display module 720 is further configured to display, in response to a fourth operation performed by the user on the first frame of image, a face detection box in a face area of each object in the first frame of image; and the processing module 710 is further configured to: when it is detected that the face detection box corresponding to the target object is selected, determine that the target object is selected.

In some embodiments, the display module 720 is further configured to: display, in response to a fifth operation of the user, at least one label in a current playback screen of the target video stream, where each label corresponds to one frame of image picture or one video clip in the target video stream; if it is detected that the first label in the at least one label is selected, obtain, based on the first label, first video playback information stored in association with the first label; and jump from the current playback screen to first video content indicated by the first video playback information for playback, where the first video content is the first frame of image picture or a first video clip that has preset playback duration and includes the first frame of image picture.

In some embodiments, the display module 720 is further configured to: display, in response to a sixth operation of the user, a label search box on the current playback screen of the target video stream; if it is detected that the first label is entered into the label search box, obtain, based on the first label, first video playback information stored in association with the first label; and jump from the current playback screen to first video content indicated by the first video playback information for playback, where the first video content is the first frame of image picture or a first video clip that has preset playback duration and includes the first frame of image picture.

In some embodiments, the display module 720 is further configured to: when the target video stream is played again and current playback progress reaches playback progress indicated by label time information, display the first label, where the label time information indicates playback progress of the target video stream when the first label is generated.

In some embodiments, the processing module 710 is specifically configured to: in response to a seventh operation performed by the user on the first frame of image picture of the target video stream, determine that a plurality of objects in the first frame of image picture are selected, where the plurality of objects include the target object; and determine a plurality of identifiers of the plurality of objects based on feature information corresponding to the plurality of objects, where the plurality of objects are in a one-to-one correspondence with the plurality of identifiers. The display module 720 is specifically configured to display, on the first frame of image picture, a plurality of labels corresponding to the plurality of identifiers of the plurality of objects, where the plurality of identifiers are in a one-to-one correspondence with the plurality of labels, and the plurality of labels include the first label.

The apparatus 700 according to this embodiment of this application may correspondingly perform the method described in embodiments of this application, and the foregoing and other operations and/or functions of units in the apparatus 700 are separately used to implement a corresponding procedure of the method. For brevity, details are not described herein again.

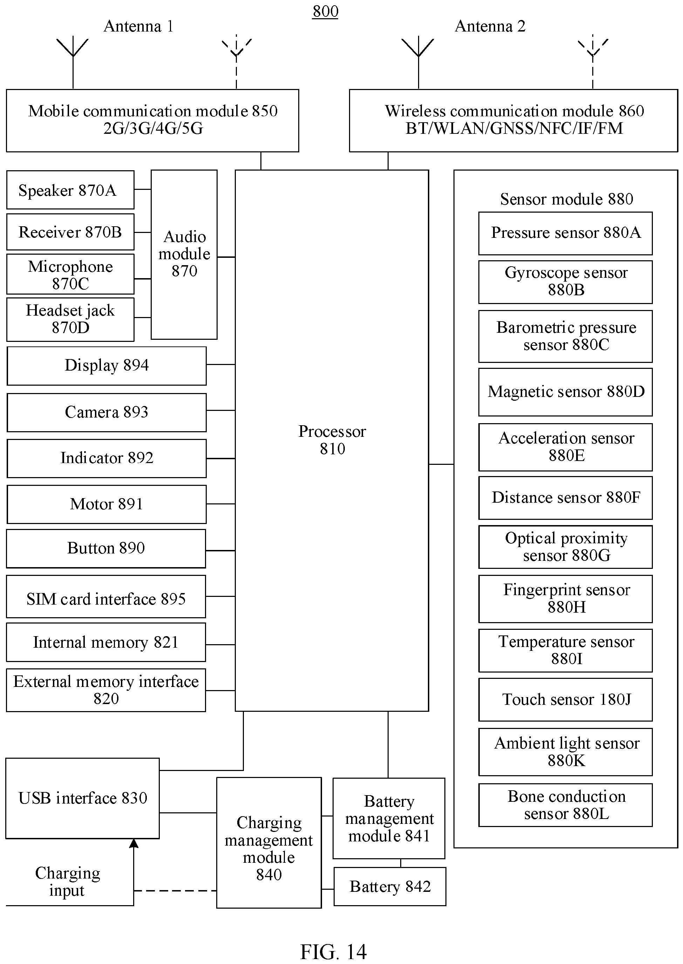

FIG. 14 is a schematic diagram of a structure of a terminal device 800. The terminal device 800 is the device of the client 300 in the foregoing embodiment. The terminal device 800 may include a processor 810, an external memory interface 820, an internal memory 821, a universal serial bus (universal serial bus, USB) interface 830, a charging management module 840, a power management unit 841, a battery 842, an antenna 1, an antenna 2, a mobile communications module 850, a wireless communications module 860, an audio module 870, a speaker 870A, a receiver 870B, a microphone 870C, a headset jack 870D, a sensor module 880, a button 890, a motor 891, an indicator 892, a camera 893, a display 894, a subscriber identification module (subscriber identification module, SIM) card interface 895, and the like. The sensor module 880 may include a pressure sensor 880A, a gyroscope sensor 880B, a barometric pressure sensor 880C, a magnetic sensor 880D, an acceleration sensor 880E, a distance sensor 880F, an optical proximity sensor 880G, a fingerprint sensor 880H, a temperature sensor 880I, a touch sensor 880J, an ambient light sensor 880K, a bone conduction sensor 880L, and the like.

The processor 810 may include one or more processing units. For example, the processor 810 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the terminal device 800. The controller may generate an operation control signal based on an instruction operation code and a time sequence signal, to complete control of instruction reading and instruction execution.

A memory may be further disposed in the processor 810, and is configured to store instructions and data. In some embodiments, the memory in the processor 810 is a cache memory. The memory may save instructions or data that is used or cyclically used by the processor 810. If the processor 810 needs to use the instructions or the data again, the processor may directly invoke the instructions or the data from the memory. This avoids repeated access, reduces waiting time of the processor 810, and therefore improves system efficiency.

The external memory interface 820 may be configured to connect to an external memory card, for example, a micro SD card, to extend a storage capability of the terminal device 800. The external memory card communicates with the processor 810 through the external memory interface 820, to implement a data storage function. For example, files such as videos are saved on an external memory card.

The internal memory 821 may be configured to store computer executable program code, and the executable program code includes an instruction. The processor 810 runs the instructions stored in the internal memory 821, to perform various function applications and data processing of the terminal device 800. The internal memory 821 may include a program storage area and a data storage area. The program storage area may store an operating system, an application required by at least one function (for example, video playback, video pause, label display, label editing, and label deleting functions), and the like. The data storage area may store data (for example, label data or a phone book) created in a process of using the terminal device 800. In addition, the internal memory 821 may include a high-speed random access memory, and may further include a nonvolatile memory, for example, at least one magnetic disk storage device, a flash storage device, a universal flash storage (universal flash storage, UFS), and the like.

The processor 810 may be configured to execute the foregoing program code, and invoke a related module to implement a function of the terminal device in embodiments of this application.

For example, in a process of playing a video by the terminal device 800, when the user selects a pause control in the video playback screen, the processor 810 may respond to the touch operation by invoking an application program corresponding to a video pause playback function, to control video pause playback.

For another example, when playback of a video is paused, when the user selects a face area of a character in the video playback screen, the processor 810 may invoke, in response to the touch operation, an application program corresponding to a label display function, and display, by using a display, a label corresponding to the character.

For another example, when the label is displayed in the video playback screen, when the user selects the label, the processor 810 may invoke, in response to the touch operation, an application program corresponding to a label editing function, and update a status of the label to a user editable state.

For another example, when the label is displayed in the video playback screen and the label is in an editable state, when the user edits the label, the processor 810 may invoke, in response to the touch operation, an application program corresponding to a label editing function and a label displaying function, and display the user-edited label by using the display.

For another example, when a first label is displayed on the video playback screen, when the user selects a deleting control for the first label, the processor 810 may invoke, in response to the touch operation, an application program corresponding to a label deleting function, and remove the label from the internal memory 821.

The terminal device 800 implements a video playback function by using a GPU, a video codec, a display 894, an application processor, and the like. The GPU is a microprocessor for image processing, and is connected to the display 894 and the application processor. The GPU is configured to: perform mathematical and geometric computation, and render an image. The processor 810 may include one or more GPUs, which execute program instructions to generate or change display information. The video codec is configured to compress or decompress a digital video. The terminal device 800 may support one or more video codecs. In this way, the terminal device 800 may play or record videos in a plurality of coding formats, for example, moving picture experts group (moving picture experts group, MPEG)-1, MPEG-2, MPEG-3, and MPEG-4.

The display 894 is configured to display an image or a video. For example, the display 894 is configured to play a video and display label data. The display 894 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diodes, QLED), or the like. In some embodiments, the terminal device 800 may include one or N displays 894, where N is a positive integer greater than 1.

The camera 893 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some embodiments, the terminal device 800 may include one or N cameras 893, where N is a positive integer greater than 1.

The charging management module 840 is configured to receive a charging input from a charger. The charger may be a wireless charger or a wired charger. The power management unit 841 receives input of the battery 842 and/or the charging management module 840, to supply power to the processor 810, the internal memory 821, an external memory, the display 894, the camera 893, the wireless communication module 860, and the like. The power management unit 841 may be further configured to monitor a parameter such as a battery capacity, a quantity of battery cycles, and a battery health status (leakage and impedance).

A wireless communication function of the terminal device 800 may be implemented by using the antenna 1, the antenna 2, the mobile communications module 850, the wireless communications module 860, the modem processor, the baseband processor, and the like. The antenna 1 and the antenna 2 are configured to transmit and receive an electromagnetic wave signal. Each antenna in the terminal device 800 may be configured to cover one or more communication frequency bands. Different antennas may be further multiplexed, to improve antenna utilization. For example, the antenna 1 may be multiplexed as a diversity antenna of a wireless local area network. In some other embodiments, the antennas may be used in combination with a tuning switch.

The mobile communications module 850 may provide a wireless communication solution that includes 2G/3G/4G/5G or the like and that is applied to the terminal device 800. The mobile communication module 850 may include at least one filter, a switch, a power amplifier, a low noise amplifier (low noise amplifier, LNA), and the like. The mobile communication module 850 may receive an electromagnetic wave by using the antenna 1, perform processing such as filtering or amplification on the received electromagnetic wave, and transmit the electromagnetic wave to the modem processor for demodulation. The mobile communication module 850 may further amplify a signal modulated by the modem processor, and convert the signal into an electromagnetic wave for radiation through the antenna 1. In some embodiments, at least some function modules of the mobile communication module 850 may be disposed in the processor 810. In some embodiments, at least some function modules in the mobile communication module 850 may be disposed in a same component as at least some modules in the processor 810.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low frequency baseband signal obtained through demodulation to the baseband processor for processing. After being processed by the baseband processor, the low frequency baseband signal is transmitted to the application processor. The application processor outputs a sound signal by using an audio device (which is not limited to the speaker 870A, the receiver 870B, or the like), or displays an image, a video, or a label by using the display 894. In some embodiments, the modem processor may be an independent component. In some other embodiments, the modem processor may be independent of the processor 810, and is disposed in a same component as the mobile communication module 850 or another function module.

The wireless communications module 860 may provide a wireless communication solution that is applied to the terminal device 800 and includes a WLAN (such as Wi-Fi), BT, a global navigation satellite system (global navigation satellite system, GNSS), FM, NFC, IR, or a general 2.4G/5G wireless communication technology. The wireless communication module 860 may be one or more components integrating at least one communications processor module. The wireless communication module 860 receives an electromagnetic wave through the antenna 2, performs frequency modulation and filtering processing on an electromagnetic wave signal, and transmits a processed signal to the processor 810. The wireless communication module 860 may further receive a to-be-sent signal from the processor 810, perform frequency modulation and amplification on the signal, and convert a processed signal into an electromagnetic wave through the antenna 2 for radiation.

In some embodiments, the antenna 1 of the terminal device 800 is coupled to the mobile communications module 850, and the antenna 2 is coupled to the wireless communications module 860, so that the terminal device 800 can communicate with a network and another device by using a wireless communication technology. For example, the terminal device 800 may interact with the server by using a wireless communication technology, for example, obtain a video source from the server, or may send label information and facial feature information that are added by the user to the server for associated storage. In addition, the terminal device 800 may invoke the label from the server based on a requirement, and display the label to the user for reference. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), and a BeiDou navigation satellite system (BeiDou navigation satellite system, BDS), quasi-zenith satellite system (QZSS), and/or satellite-based augmentation system (satellite-based augmentation systems, SBAS).

The terminal device 800 may implement an audio function, for example, music playing and recording, through the audio module 870, the speaker 870A, the receiver 870B, the microphone 870C, the headset jack 870D, the application processor, and the like. The audio module 870 is configured to convert digital audio information into an analog audio signal for output, and is also configured to convert analog audio input into a digital audio signal. The audio module 870 may be further configured to encode and decode an audio signal. In some embodiments, the audio module 870 may be disposed in the processor 810, or some function modules of the audio module 870 are disposed in the processor 810. The speaker 870A, also referred to as a "loudspeaker", is configured to convert an audio electrical signal into a sound signal. When the terminal device 800 plays a video, the terminal device 800 may output a video sound by using the speaker 870A. The receiver 870B, also referred to as an "earpiece", is configured to convert an electrical audio signal into a sound signal. When a call is answered or voice information is received through the terminal device 800, the receiver 870B may be put close to a human ear to listen to a voice. The microphone 870C, also referred to as a "mike", is configured to convert a sound signal into an electrical signal. When making a call or sending a voice message, a user may make a sound near the microphone 870C through the mouth of the user, to input a sound signal to the microphone 870C. At least one microphone 870C may be disposed in the terminal device 800. In some other embodiments, two microphones 870C may be disposed in the terminal device 800, to collect a sound signal and further implement a noise reduction function. In some other embodiments, three, four, or more microphones 870C may alternatively be disposed in the terminal device 800, to collect a sound signal, implement noise reduction, and identify a sound source, to implement a directional recording function and the like. The headset jack 870D is configured to connect to a wired headset. If the terminal device 800 is connected to a headset through the headset interface 870D, when playing a video, the terminal device 800 may output a video sound by using the headset.

The pressure sensor 880A is configured to sense a pressure signal, and can convert the pressure signal into an electrical signal. In some embodiments, the pressure sensor 880A may be disposed on the display 894. There are a plurality of types of pressure sensors 880A, such as a resistive pressure sensor, an inductive pressure sensor, and a capacitive pressure sensor. The capacitive pressure sensor may include at least two parallel plates made of conductive materials. When a force is applied to the pressure sensor 880A, capacitance between electrodes changes. The terminal device 800 determines pressure intensity based on a capacitance change. When a touch operation is performed on the display 894, the terminal device 800 detects intensity of the touch operation through the pressure sensor 880A. The terminal device 800 may further calculate a touch location based on a detection signal of the pressure sensor 880A. In some embodiments, touch operations that are performed in a same touch position but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

For example, when playing of the video is paused, and when the user presses a facial area of a character in the video playback screen and a pressing force is greater than or equal to a first pressure threshold, the pressure sensor senses the touch operation and transmits the touch operation to the application processor, and the application processor may control, in response to the touch operation, the display 894 to display a label corresponding to the character.

The gyroscope sensor 880B may be configured to determine a motion posture of the terminal device 800. In some embodiments, angular velocities of the terminal device 800 around three axes (for example, x, y, and z axes) may be determined by using the gyroscope sensor 880B. The gyroscope sensor 880B may be configured to implement image stabilization during photographing. The acceleration sensor 880E may detect accelerations in various directions (usually on three axes) of the terminal device 800. A magnitude and a direction of gravity may be detected when the terminal device 800 is stationary. The acceleration sensor 180E may be further configured to identify a posture of the terminal device, and is used in an application such as switching between a landscape mode and a portrait mode or a pedometer. The distance sensor 880F is configured to measure a distance. The terminal device 800 may measure a distance by using infrared light or a laser. In some embodiments, in a shooting scenario, the terminal device 800 may measure a distance by using the distance sensor 880F, to implement quick focusing.

The optical proximity sensor 880G is configured to detect infrared reflected light from a nearby object. When sufficient reflected light is detected, it may be determined that there is an object near the terminal device 800. When insufficient reflected light is detected, the terminal device 800 may determine that there is no object near the terminal device 800. The terminal device 800 may detect, by using the optical proximity sensor 880G, that the user holds the terminal device 800 close to an ear for a call, to automatically turn off a screen for power saving.

The ambient light sensor 880K is configured to sense ambient light brightness. The terminal device 800 may adaptively adjust brightness of the display 894 based on the sensed ambient light brightness. The barometric pressure sensor 880C is configured to measure barometric pressure. In some embodiments, the terminal device 800 calculates an altitude by using a barometric pressure value measured by the barometric pressure sensor 880C, to assist in positioning and navigation. The magnetic sensor 880D includes a Hall sensor. The terminal device 800 may detect a displacement of the terminal device 800 by using the magnetic sensor 880D. The fingerprint sensor 880H is configured to collect a fingerprint. The terminal device 800 may use a feature of the collected fingerprint to implement fingerprint-based unlocking, application lock access, fingerprint-based photographing, fingerprint-based call answering, and the like. The temperature sensor 8801 is configured to detect a temperature. In some embodiments, the terminal device 800 executes a temperature processing policy by using the temperature detected by the temperature sensor 880I.

The touch sensor 880J is also referred to as a "touch panel". The touch sensor 880J may be disposed on the display 894, and the touch sensor 880J and the display 894 constitute a touchscreen, which is also referred to as a "touchscreen". The touch sensor 880J is configured to detect a touch operation performed on or near the touch sensor 8801. The touch sensor may transfer the detected touch operation to the application processor to determine a type of the touch event. A visual output related to the touch operation may be provided on the display 894. In some other embodiments, the touch sensor 880J may alternatively be disposed on a surface of the terminal device 800 at a location different from a location of the display 894.

For example, in a process of playing a video by the terminal device 800, when the user touches a pause control in the video playback screen, the touch sensor senses the touch operation and transmits the touch operation to the application processor. The application processor may control, in response to the touch operation, the video to pause playback.

For another example, in a case in which playing of the video is paused, when the user touches the face area of the person in the video playback screen and the touch duration is longer than preset duration (that is, a touch and hold operation), the touch sensor senses the touch operation and transmits the touch operation to the application processor. The application processor may display, in response to the touch operation, the label corresponding to the person.

For another example, when a label is displayed in the video playback screen, and when the user touches the label, the touch sensor senses the touch operation and transfers the touch operation to the application processor. The application processor may update, in response to the touch operation, a status of the label to a user editable state.

For another example, when a label is displayed in the video playback screen and the label is in an editable state, and when the user edits the label, the touch sensor senses the touch operation and transmits the touch operation to the application processor, and the application processor may display, in response to the touch operation, the label edited by the user.

The bone conduction sensor 880L may obtain a vibration signal. In some embodiments, the bone conduction sensor 880L may obtain a vibration signal of a vibration bone of a human vocal-cord part. The bone conduction sensor 880L may also be in contact with a human pulse, to receive a blood pressure beating signal. The button 890 includes a power button, a volume button, and the like. The button 890 may be a mechanical button, or may be a touch button. The terminal device 800 may receive a button input, and generate a button signal input related to a user setting and function control of the terminal device 800.

The motor 891 may generate a vibration prompt. The motor 891 may be configured to provide an incoming call vibration prompt or a touch vibration feedback. For example, a touch operation acting on different applications (for example, adding a label, displaying a label, editing a label, deleting a label) may correspond to different vibration feedback effects. The motor 891 may also correspond to different vibration feedback effects for touch operations performed on different areas of the display 894. Different application scenarios may also correspond to different vibration feedback effects. A touch vibration feedback effect may be further customized.

The indicator 892 may be an indicator light, and may be configured to indicate a charging status and a power change, or may be configured to indicate a message, a missed call, a notification, and the like. For example, the indicator 892 may indicate receipt of a label related message.

The SIM card interface 895 is configured to connect to a SIM card. The SIM card may be inserted into the SIM card interface 895 or removed from the SIM card interface 895, to implement contact with or separation from the terminal device 800. The terminal device 800 interacts with a network through the SIM card, to implement functions such as calling and data communication.

It may be understood that the components shown in FIG. 14 do not constitute a specific limitation on the terminal device 800. The terminal device 800 may further include more or fewer components than those shown in the figure, or combine some components, or split some components, or have different component arrangements.

It should be understood that the terminal device 800 shown in FIG. 14 may correspond to the apparatus 700 shown in FIG. 13 or the client 300 shown in FIG. 9. The processor 810 in the terminal device 800 may correspond to the processing module 710 in the apparatus 700 or the processing module 320 in the client 300, and the display 894 in the terminal device 800 may correspond to the display module 720 in the apparatus 700 or the display module 330 in the client 300.

During actual implementation, when the terminal device 800 runs, the processor 810 executes computer execution instructions in the internal memory 821 to perform the operation steps of the method 100 by using the terminal device 800.

The terminal device 800 may be a mobile terminal, or may be a non-mobile terminal. For example, the terminal device 800 may be a mobile phone, a tablet computer, a notebook computer, a palmtop computer, an in-vehicle terminal, a wearable device, an ultra-mobile personal computer (ultra-mobile personal computer, UMPC), a netbook, a personal digital assistant (personal digital assistant). PDA), an augmented reality (AR)/virtual reality (virtual reality, VR) device, a desktop computer, and the like. A type of the terminal device 800 is not limited in this embodiment of this application.

In this embodiment of this application, the apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In the technical solutions provided in embodiments of this application, an example in which an apparatus configured to implement a function of a terminal is a terminal device is used to describe the technical solutions provided in embodiments of this application.

In this embodiment of this application, the terminal device includes a hardware layer, an operating system layer running above the hardware layer, and an application layer running above the operating system layer. The hardware layer may include hardware such as a central processing unit (central processing unit, CPU), a memory management unit (memory management unit, MMU), and a memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Optionally, in some embodiments, an embodiment of this application further provides a computer-readable medium. The computer-readable medium stores program code. When the computer program code is run on a computer, the computer performs the operation steps in the foregoing method embodiments.

Optionally, in some embodiments, an embodiment of this application further provides a computer program product. The computer program product includes computer program code. When the computer program code is run on a computer, the computer is enabled to perform the operation steps in the foregoing method embodiments.

Various aspects or features of this application may be implemented as methods, apparatuses, or products using standard programming and/or engineering techniques. As used in this specification, the term "product" may cover a computer program accessible from any computer-readable device, carrier, or medium. For example, the computer-readable medium may include but is not limited to a magnetic storage device (for example, a hard disk, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), card, stick or key drive).

The various storage media described herein may represent one or more devices and/or another machine-readable medium for storing information. The term "machine-readable medium" may include, but is not limited to, a wireless channel and various other media capable of storing, containing, and/or carrying instructions and/or data.

It should be understood that the processor mentioned in this embodiment of this application may be a central processing unit (central processing unit, CPU), or may be another general purpose processor, a DSP, an application-specific integrated circuit (application-specific integrated circuit, ASIC), or a field programmable gate array (field programmable gate array, FPGA) or another programmable logic device, a discrete gate or transistor logic device, or a discrete hardware component. The general-purpose processor may be a microprocessor or may be any conventional processor or the like.

It may be understood that the memory in this embodiment of the present disclosure may be a volatile memory or a nonvolatile memory, or may include both a volatile memory and a nonvolatile memory. The nonvolatile memory may be a read-only memory (read-only Memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. For example, RAM can be used as an external cache. As an example rather than a limitation, the RAM may include the following a plurality of forms: a static random access memory (static RAM, SRAM), a dynamic random access memory (dynamic RAM, DRAM), and a synchronous dynamic random access memory (synchronous DRAM, SDRAM), a double data rate synchronous dynamic random access memory (double data rate SDRAM, DDR SDRAM), enhanced synchronous dynamic random access memory (enhanced SDRAM, ESDRAM), synchronously connected dynamic random access memory (synchlink DRAM, SLDRAM), and direct rambus random access memory (direct rambus RAM, DR RAM). It should be noted that when the processor is a general purpose processor, a DSP, an ASIC, an FPGA or another programmable logic device, a discrete gate or a transistor logic device, or a discrete hardware component, a memory (storage module) may be integrated into the processor. It should also be noted that the memory described in this application is intended to include but not limited to these and any other suitable types of memories.

A person of ordinary skill in the art may be aware that, in combination with examples described in embodiments disclosed in this specification, units and steps may be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the protection scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division of the units or modules is only logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions in embodiments. In addition, functional units in embodiments of this application may be integrated into one unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer software product. The computer software product is stored in a storage medium, and includes several instructions for instructing a computer device (which may be a personal computer, a server, or a network device) to perform all or some of the steps of the methods described in embodiments of this application. The storage medium may include but is not limited to any medium that can store program code, such as a USB flash disk, a removable hard disk, a ROM, a RAM, a magnetic disk, or an optical disc.

Unless otherwise defined, all technical and scientific terms used herein have the same meanings generally understood by those skilled in the art of this application. Terms used in this specification of this application are merely intended to describe specific embodiments, but are not intended to limit this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for displaying a label in an image picture, comprising:
determining an identifier of a target object based on feature information of the target object when it is detected that the target object in a first frame of image picture of a target video stream is selected; and
displaying a first label corresponding to the identifier of the target object on the first frame of image picture.

2. The method according to claim 1, wherein before the determining an identifier of a target object based on feature information of the target object when it is detected that the target object in a first frame of image picture of a target video stream is selected, the method further comprises:
in response to a first operation performed by a user on the target object in a second frame of image picture of the target video stream, generating the first label, wherein there is a correspondence relationship between the first label and the identifier of the target object.

3. The method according to claim 1 or 2, wherein after the displaying a first label corresponding to the identifier of the target object on the first frame of image picture, the method further comprises:
in response to a second operation performed by the user on the first label, performing first processing on the first label, wherein
the first processing is any one of the following: updating content of the first label; updating a display location of the first label; sharing the first label; hiding the first label; and deleting the first label.

4. The method according to any one of claims 1 to 3, wherein the displaying a first label corresponding to the identifier of the target object on the first frame of image picture comprises:
displaying the first label in a display area corresponding to the target object in the first frame of image picture, wherein the display area is located in a preset range centered on the target object.

5. The method according to any one of claims 1 to 4, wherein the displaying a first label corresponding to the identifier of the target object on the first frame of image picture comprises:
displaying a label box on the first frame of image picture, and displaying the first label in the label box.

6. The method according to any one of claims 1 to 5, wherein the identifier of the target object is determined based on a correspondence relationship between at least one piece of feature information and at least one identifier, and the at least one piece of feature information is in a one-to-one correspondence with the at least one identifier; and the at least one piece of feature information comprises feature information of the target object, and the at least one identifier comprises the identifier of the target object.

7. The method according to any one of claims 1 to 6, wherein the feature information of the target object is facial feature information of the target object.

8. The method according to claim 7, wherein that it is detected that the target object in a first frame of image picture of a target video stream is selected comprises:
in response to a third operation performed by the user on the first frame of image picture, displaying a selection box in an area in which a face of the target object is located in the first frame of image picture, and determining that the target object is selected; or
in response to a fourth operation performed by the user on the first frame of image, displaying a face detection box in a face area of each object in the first frame of image; and when it is detected that the face detection box corresponding to the target object is selected, determining that the target object is selected.

9. The method according to any one of claims 1 to 8, wherein the method further comprises:
in response to a fifth operation of the user, displaying at least one label in a current playback screen of the target video stream, wherein each label corresponds to one frame of image picture or one video clip in the target video stream;
if it is detected that the first label in the at least one label is selected, obtaining, based on the first label, first video playback information stored in association with the first label; and
jumping from the current playback screen to first video content indicated by the first video playback information for playback, wherein the first video content is the first frame of image picture or a first video clip that has preset playback duration and comprises the first frame of image picture.

10. The method according to any one of claims 1 to 8, wherein the method further comprises:
in response to a sixth operation of the user, displaying a label search box on the current playback screen of the target video stream;
if it is detected that the first label is entered into the label search box, obtaining, based on the first label, first video playback information stored in association with the first label; and
jumping from the current playback screen to first video content indicated by the first video playback information for playback, wherein the first video content is the first frame of image picture or a first video clip that has preset playback duration and comprises the first frame of image picture.

11. The method according to any one of claims 1 to 10, wherein the method further comprises:
when the target video stream is played again and current playback progress reaches playback progress indicated by label time information, displaying the first label, wherein the label time information indicates playback progress of the target video stream when the first label is generated.

12. The method according to any one of claims 1 to 11, wherein obtaining the identifier of the target object based on the feature information of the target object when it is detected that the target object in the first frame of image picture of the target video stream is selected comprises:
in response to a seventh operation performed by the user on the first frame of image picture of the target video stream, determining that a plurality of objects in the first frame of image picture are selected, wherein the plurality of objects comprise the target object; and
determining a plurality of identifiers of the plurality of objects based on feature information corresponding to the plurality of objects, wherein the plurality of objects are in a one-to-one correspondence with the plurality of identifiers; and
the displaying a first label corresponding to the identifier of the target object on the first frame of image picture comprises:
displaying, on the first frame of image picture, a plurality of labels corresponding to the plurality of identifiers of the plurality of objects, wherein the plurality of identifiers are in a one-to-one correspondence with the plurality of labels, and the plurality of labels comprise the first label.

13. A terminal device, comprising a processor, wherein the processor is coupled to a memory, and the processor is configured to execute a computer program or instructions stored in the memory, to implement the method according to any one of claims 1 to 12.

14. A computer-readable storage medium, wherein the computer-readable storage medium stores a computer program, and when the computer program is run, the method according to any one of claims 1 to 12 is implemented.
